(19) Europäisches Patentamt
European Patent Office
Office européen des brevets

(11) **EP 3 042 480 B1**

(12) **FASCICULE DE BREVET EUROPEEN**

(45) Date de publication et mention de la délivrance du brevet:
**20.12.2017 Bulletin 2017/51**

(21) Numéro de dépôt: **14777686.8**

(22) Date de dépôt: **02.09.2014**

(51) Int Cl.:
***H04L 27/26*** *(2006.01)*

(86) Numéro de dépôt international:
**PCT/FR2014/052164**

(87) Numéro de publication internationale:
**WO 2015/033051 (12.03.2015 Gazette 2015/10)**

(54) **PROCÉDÉ ET DISPOSITIF DE TRANSMISSION DE BLOCS DE SYMBOLES DE DONNÉES COMPLEXES, PROCÉDÉ ET DISPOSITIF DE RÉCEPTION ET PROGRAMMES D'ORDINATEUR CORRESPONDANTS**

VERFAHREN UND GERÄT ZUR ÜBERTRAGUNG VON KOMPLEXEN DATENSYMBOLBLOCKS, VERFAHREN UND GERÄT ZUR EMPFANG UND ENTSPRECHENDE COMPUTER PROGRAMME

METHOD AND APPARATUS FOR TRANSMISSION OF COMPLEX DATA SYMBOL BLOCKS, METHOD AND APPARATUS FOR RECEPTION AND CORRESPONDING COMPUTER PROGRAMS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.09.2013 FR 1358415**

(43) Date de publication de la demande:
**13.07.2016 Bulletin 2016/28**

(73) Titulaire: **Orange**
**75015 Paris (FR)**

(72) Inventeurs:
• **LIN, Hao**
**35700 Rennes (FR)**
• **SIOHAN, Pierre**
**F-35200 Rennes (FR)**

(74) Mandataire: **Vidon Brevets & Stratégie**
**16B, rue de Jouanet**
**B.P. 90333**
**Technopole Atalante**
**35703 Rennes Cedex 7 (FR)**

(56) Documents cités:
**EP-A1- 2 608 474**

• **GASPAR IVAN ET AL: "Low Complexity GFDM Receiver Based on Sparse Frequency Domain Processing", 2013 IEEE 77TH VEHICULAR TECHNOLOGY CONFERENCE (VTC SPRING), IEEE, 2 juin 2013 (2013-06-02), pages 1-6, XP032548023, ISSN: 1550-2252, DOI: 10.1109/VTCSPRING.2013.6692619 [extrait le 2013-12-22]**
• **NICOLA MICHAILOW ET AL: "Generalized frequency division multiplexing: Analysis of an alternative multi-carrier technique for next generation cellular systems", WIRELESS COMMUNICATION SYSTEMS (ISWCS), 2012 INTERNATIONAL SYMPOSIUM ON, IEEE, 28 août 2012 (2012-08-28), pages 171-175, XP032263744, DOI: 10.1109/ISWCS.2012.6328352 ISBN: 978-1-4673-0761-1**
• **ROHIT DATTA ET AL: "FBMC and GFDM Interference Cancellation Schemes for Flexible Digital Radio PHY Design", DIGITAL SYSTEM DESIGN (DSD), 2011 14TH EUROMICRO CONFERENCE ON, IEEE, 31 août 2011 (2011-08-31), pages 335-339, XP032058647, DOI: 10.1109/DSD.2011.48 ISBN: 978-1-4577-1048-3**
• **ROHIT DATTA ET AL: "Comparative Analysis on Interference Suppressive Transmission Schemes for White Space Radio Access", VEHICULAR TECHNOLOGY CONFERENCE (VTC SPRING), 2012 IEEE 75TH, IEEE, 6 mai 2012 (2012-05-06), pages 1-5, XP032202455, DOI: 10.1109/VETECS.2012.6240038 ISBN: 978-1-4673-0989-9**

## Description

### 1. Domaine de l'invention

Le domaine de l'invention est celui des communications mettant en oeuvre une modulation multiporteuse.

Plus précisément, l'invention concerne une nouvelle technique de transmission sur un multiplex de porteuses de type GFDM (en anglais « Generalized Frequency Division Multiplexing ») de données de communication.

L'invention trouve notamment des applications dans le domaine des communications sans fil (DAB, DVB-T, WLAN, optique non guidée, etc.) ou filaires (xDSL, PLC, optique, etc.). Par exemple, l'invention trouve des applications dans le domaine des communications cellulaires, sur voix montante ou descendante, des communications entre machines (en anglais M2M pour « Machine to Machine »), etc, notamment pour la future génération de radio cellulaire.

### 2. Art antérieur

La transmission GFDM, telle que présentée dans le document « GFDM-Generalized Frequency Division Multiplexing » (Fettweis et al., IEEE Vehicular Technology Conference, Barcelone, Espagne, Avril 2009), a initialement été proposée pour les communications dans les « espaces blancs » (en anglais « white spaces ») et est ensuite devenue une référence pour la couche physique dans le contexte de la radio intelligente, du fait de ses bonnes propriétés fréquentielles.

Une telle technique de transmission présente notamment une bonne capacité à résister à des échos longs grâce à l'introduction d'un préfixe cyclique (CP), et fournit un signal ayant une meilleure concentration fréquentielle qu'un signal obtenu avec une modulation OFDM et l'introduction d'un préfixe cyclique.

Le principe général de la transmission GFDM repose sur l'idée de regrouper en un seul bloc un ensemble de symboles de données d'un réseau temps-fréquence. Ensuite pour chaque bloc, un traitement par sous-porteuse est réalisé qui inclut un suréchantillonnage et la mise en forme du signal par une technique de filtrage dans le domaine fréquentiel. Ceci permet d'obtenir un spectre amélioré par rapport au système OFDM et sa fenêtre rectangulaire.

Ces traitements produisent un signal GFDM multiporteuse bande de base qui, pour un bloc de symboles de données entrants, s'exprime par :

$$s[k] = \sum_{m=0}^{M-1} \sum_{n=0}^{K-1} c_m[n] \underbrace{\tilde{g}[k - nN] e^{\frac{j2\pi km}{M}}}_{\tilde{g}_{m,n}[k]}$$

avec : M le nombre de sous-porteuses, i.e. le nombre de lignes du bloc ;

$K$ le nombre de symboles de données par intervalle temporel (en anglais « slot »), i.e. le nombre de colonnes du bloc ;

$N$ le facteur de sur-échantillonnage (avec $N \geq M$) ;

$c_m[n]$ les symboles de données, avec n l'indice du symbole de données dans l'intervalle temporel (i.e. de la colonne du bloc), $0 \leq n \leq K - 1$, et m l'indice de la sous-porteuse (i.e. de la ligne du bloc), $0 \leq m \leq M - 1$ ;

$\tilde{g}[k]$ un filtre de mise en forme, obtenu par répétition périodique du filtre prototype $g[k]$ sur une période $NK$, tel que $\tilde{g}[k] = g[\mathrm{mod}(k, NK)]$.

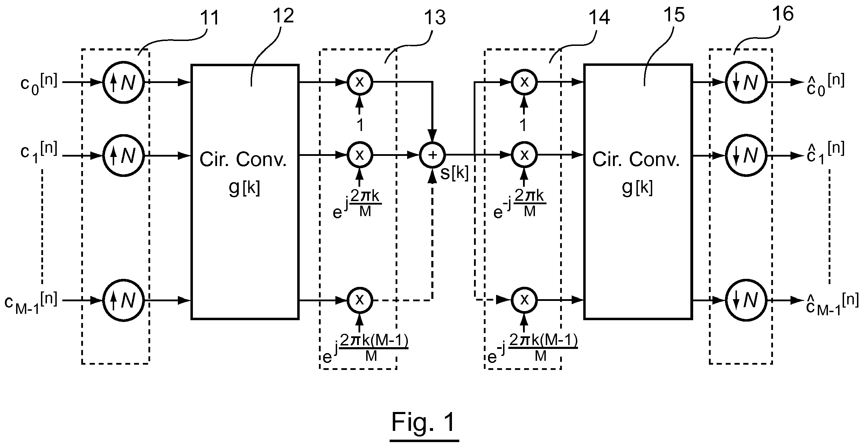

La figure 1 illustre notamment la structure d'un transmultiplexeur GFDM en bande de base mettant en oeuvre, pour un bloc de symboles de données :

- côté émission :

  - une étape d'expansion/suréchantillonnage 11 des symboles de données par le facteur de suréchantillonnage $N$, mise en oeuvre sous-porteuse par sous-porteuse,
  - une étape de filtrage 12 par le filtre de mise en forme $\tilde{g}[k]$ (i.e. par convolution circulaire du filtre prototype g[k]),
  - une étape de modulation 13, délivrant le signal à porteuse multiples s[k] ; et

- côté réception :

  - une étape de démodulation 14,
  - une étape de filtrage 15 par le filtre de mise en forme $\tilde{g}[k]$ (i.e. par convolution circulaire du filtre prototype g[k]),
  - une étape de décimation 16 par le facteur de suréchantillonnage N, mise en oeuvre sous-porteuse par sous-porteuse.

Un inconvénient de cette technique est que les opérations de suréchantillonnage/expansion sont mises en oeuvre dans le domaine fréquentiel, sous-porteuse par sous-porteuse. Comme indiqué précédemment, ceci permet d'obtenir un spectre amélioré par rapport au système OFDM et sa fenêtre rectangulaire, mais la conséquence est que le GFDM produit un système de modulation non orthogonal.

En plus de l'absence d'orthogonalité, on peut noter qu'un tel transmultiplexeur GFDM présente une complexité de réalisation très élevée, et notamment plus élevée que celle d'un transmultiplexeur OFDM avec préfixe cyclique.

Le transmetteur GFDM peut, de manière alternative, être représenté par un modèle matriciel, de sorte qu'il est immédiat d'aboutir à une implémentation directe du transmetteur GFDM.

Cependant la complexité de réalisation de cette implémentation directe nécessite un nombre très élevé d'opérations, de l'ordre de $NMK^2$ multiplications complexes. De ce fait, cette modulation devient trop complexe pour être envisagée en pratique pour une valeur importante de $M$ ou de $K$.

Dans la recherche d'un algorithme d'implémentation performant du GFDM, il a été proposé dans le document « Generalized Frequency Division Multiplexing : Analysis of an Alternative Multi- Carrier Technique for Next Generation Cellular Systems » (Michailow et al., International Symposium on Wireless Communication System (ISWCS'12), Paris, France, août 2012) une technique basée sur l'utilisation de transformées de Fourier. Une partie des opérations est ainsi réalisée dans le domaine fréquentiel, en tirant avantage du fait qu'une convolution circulaire dans le domaine temporel est équivalente à un produit dans le domaine fréquentiel. De plus, un gain supplémentaire provient alors du fait que le filtre prototype peut se réduire à peu de coefficients dans le domaine fréquentiel.

En termes mathématiques, cet algorithme, encore appelé algorithme du SoA, peut s'écrire comme suit :

$$s[k] = \sum_{m=0}^{M-1} s_m[k]$$

avec

$$s_m[k] = \text{IDFT}_{NK}\left(\text{DFT}_{NK}\big(c_m[n]\delta(k-nN)\big) \times \text{DFT}_{NK}(g[k]) * \text{DFT}_{NK}\left(e^{\frac{j2\pi mk}{N}}\right)\right)$$

où $\text{IDFT}_{NK}(.)$ et $\text{DFT}_{NK}(.)$ correspondent respectivement à la transformée de Fourier discrète inverse de taille $NK$ et à la transformée de Fourier discrète directe de taille $NK,$

\* est l'opérateur de convolution circulaire, et

$\delta$ désigne le symbole de Kronecker.

Puisque les transformées de Fourier discrète directe et inverse peuvent être calculées de manière efficace par des algorithmes de transformée de Fourrier rapide de type IFFT/FFT (en anglais « Inverse Fast Fourier Transform » ou « Fast Fourier Transform »), on considère que l'implémentation d'un transmultiplexeur basé sur cet algorithme est efficace.

Toutefois, après analyse détaillée de cette technique, on constate que la complexité opératoire exprimée en nombre de multiplications complexes (CM) s'exprime par :

$$CM = \frac{KN}{2}\log_2 N + \frac{(M+N)K}{2}\log_2 K + MLK$$

où L est le facteur d'étalement, indiquant le nombre de coefficients utiles (i.e. non nuls) du filtre de mise en forme pris en compte dans le domaine fréquentiel.

Un inconvénient de cette technique est que sa complexité opératoire dépend du facteur d'étalement L. De plus, si l'on prend en compte l'aspect orthogonalité, on constate que la complexité effective de cette technique est plus élevée que celle indiquée pour l'algorithme SoA dans le document *« Generalized Frequency Division Multiplexing : Analysis of an Alternative Multi-Carrier Technique for Next Generation Cellular Systems »* pour *L* égal 2. Cette technique ne fait donc pas le lien entre les critères de complexité et d'orthogonalité du système résultant. Cela se traduit par une perte en performances entre l'implémentation sous forme directe telle que présentée dans le document *« GFDM-Generalized Frequency Division Multiplexing »* et celle à complexité réduite telle que présentée dans le document *« Generalized Frequency Division Multiplexing : Analysis of an Alternative Multi- Carrier Technique for Next Generation Cellular Systems ».* EP 2 608 474 A1 (VODAFONE HOLDING GMBH [DE]) 26 juin 2013 (2013-06-26) divulgue un procédé de transmission de symboles de données complexes destiné à etre mis en oeuvre dans un système de télécommunications, délivrant un signal à porteuses multiples, comprenant une étape de mise en forme d'au moins un bloc de M x K symboles de données complexes, avec M>1 et K>1. Il existe donc un besoin pour une nouvelle technique de transmission de type GFDM ne présentant pas l'ensemble des inconvénients de l'art antérieur.

## 3. Exposé de l'invention

L'invention propose une solution nouvelle qui ne présente pas l'ensemble de ces inconvénients de l'art antérieur, sous la forme d'un procédé de transmission de symboles de données complexes destiné à être mis en oeuvre dans un système de télécommunications, délivrant un signal à porteuses multiples.

Selon l'invention, un tel procédé comprend une étape de mise en forme d'au moins un bloc de *MxK* symboles de données complexes, avec *M* > 1 *et K* > 1, mettant en oeuvre les étapes suivantes :

- pour au moins une colonne du bloc :

  - transformation des *M* symboles de données complexes de la colonne du domaine fréquentiel vers le domaine temporel, délivrant *N* symboles transformés, avec $N \geq M$;
  - répétition cyclique des *N* symboles transformés, délivrant *NK* symboles (transformés) répétés ;
  - filtrage par un filtre de mise en forme des *NK* symboles (transformés) répétés, délivrant *NK* symboles (transformés répétés) filtrés ; et

- sommation des symboles (transformés répétés) filtrés obtenus pour les différentes colonnes du bloc, délivrant *NK* échantillons temporels formant le signal à porteuses multiples.

L'invention propose ainsi une nouvelle technique pour la mise en oeuvre d'une transmission de type GFDM, permettant de générer un signal à porteuses multiples à partir de blocs de symboles de données.

Notamment, la solution proposée permet une implémentation rapide d'un transmultiplexeur de type GFDM et offrant une complexité de réalisation réduite par rapport aux techniques de l'art antérieur. En particulier, la complexité du transmultiplexeur selon l'invention ne dépend pas du facteur d'étalement L.

Pour ce faire, la technique de transmission selon l'invention met en oeuvre, pour au moins un bloc de symbole de données complexes (ou éventuellement réels), une transformation des symboles de données du domaine fréquentiel vers le domaine temporel, mise en oeuvre colonne par colonne. Ceci permet notamment d'utiliser une transformée inverse de petite taille pour passer du domaine fréquentiel vers le domaine temporel, et de réaliser l'étape de filtrage dans le domaine temporel.

Au contraire, selon l'art antérieur, on réalise le filtrage dans le domaine fréquentiel, puis on applique nécessairement une transformée inverse de grande taille pour passer du domaine fréquentiel vers le domaine temporel.

En particulier, l'étape de transformation met en oeuvre une transformée de Fourier rapide inverse de taille *NxN* appliquée aux *M* symboles de données si *N = M,* et appliquée aux M symboles de données complétés par (*N - M*) symboles nuls si *N > M.*

Un tel algorithme est particulièrement efficace et facilement implémentable, notamment dans un dispositif de transmission, par exemple en utilisant un algorithme de type Cooley-Tukey ou de type Good.

Selon une caractéristique particulière de l'invention, l'étape de mise en forme d'au moins un bloc de *MxK* symboles de données délivre un signal à porteuses multiples tel que :

$$\mathbf{s}_{NK \times 1} = diag\{\mathbf{G}_{NK \times K}(\mathbf{E}_{NK \times N}\mathbf{W}_{N \times N}\mathbf{C}_{N \times K})^T\}$$

avec : $C_{N \times K} = \{c_m[n]\}_{N \times K}$ le bloc de symboles de données, complété par des éléments nuls si *N > M,* pour $0 < n \leq K - 1, 0 \leq m \leq M - 1$ ;

$\mathbf{W}_{N \times N} = \left\{e^{\frac{j2\pi km}{M}}\right\}_{N \times N}$ la matrice représentative de l'étape de transformation du domaine fréquentiel vers le domaine temporel, pour $0 \leq k \leq N - 1, 0 \leq m \leq N - 1$ ;

$\mathbf{E}_{NK \times N}$ la matrice représentative de l'étape de répétition cyclique, telle que $\mathbf{E}_{NK \times N}^T = [\mathbf{I}_{N \times N} \cdots \mathbf{I}_{N \times N}]_{N \times NK}$ ;

$\mathbf{G}_{NK \times K} = \{g^{k,n}\}_{NK \times K} = \{g[\text{mod}(k - nN, NK)]\}_{NK \times K}$ la matrice représentative de l'étape de filtrage par le filtre de mise en forme $\tilde{g}[k]$, obtenu par répétition périodique d'un filtre prototype g[k] sur une période NK et tel que $\tilde{g}[k] = g[\text{mod}(k,NK)]$, pour $0 \leq k \leq NK - 1, 0 \leq n \leq K - 1$ ;

$(.\,)^T$ l'opérateur de transposition matricielle ;

*diag*{. } l'opérateur d'extraction des éléments diagonaux d'une matrice.

On peut ainsi écrire l'algorithme de transmission sous forme matricielle, ce qui permet une mise en oeuvre simple et efficace d'un transmetteur de type GFDM.

Selon un aspect particulier de l'invention, le filtre de mise en forme est un filtre en racine de cosinus surélevé.

En particulier, le filtre de mise en forme est un filtre en racine de cosinus surélevé modifié, comprenant, dans le domaine fréquentiel, des coefficients nuls et des coefficients non nuls, et dont une valeur approchée du support $L$ des coefficients non nuls est telle que : $L = 2 \left\lceil \frac{K(1+\alpha)}{2} \right\rceil - 1,$ avec $\lceil . \rceil$ l'opérateur partie entière par excès et $\alpha$ le facteur de retombée (en anglais « roll-off ») du filtre de mise en forme.

En particulier, le filtre de mise en forme est un filtre en racine de cosinus surélevé modifié tel que : $L = 2 \left\lceil \frac{K}{2} \right\rceil - 1,$ avec $\alpha = 0$.

En modifiant de cette façon le filtre de mise en forme, on constate que les sous-porteuses du signal à porteuses multiples sont quasiment orthogonales. On définit ainsi selon l'invention un système de transmission de type GFDM quasiment orthogonal, qui s'approche du système de transmission OFDM.

Selon une caractéristique particulière de l'invention, le procédé de transmission comprend en outre une étape d'insertion d'un intervalle de garde.

En particulier, le procédé de transmission selon l'invention comprend une étape d'insertion d'un préfixe cyclique devant au moins un échantillon temporel formant le signal à porteuses multiples,

ledit préfixe cyclique, de longueur $L_{CP} = L_{GI} + L_{RI}$, comprenant une première portion de longueur $L_{GI}$ utilisée pour absorber l'interférence due au canal de transmission et une deuxième portion de longueur $L_{RI}$ utilisée pour améliorer le spectre de puissance du signal à porteuses multiples,

et une étape de fenêtrage du signal à porteuses multiples mettant en oeuvre les étapes suivantes :

- multiplication de chacun des échantillons temporels formant le signal à porteuses multiples et du préfixe cyclique par un coefficient de fenêtrage, délivrant $KN + L_{CP}$ échantillons fenêtrés ;
- suréchantillonnage par un facteur de suréchantillonnage $Q = KN + L_{GI}$ des échantillons fenêtrés, délivrant $KN + L_{CP}$ échantillons suréchantillonnés ;
- décalage et sommation des échantillons suréchantillonnés, délivrant un signal à porteuses multiples fenêtré.

En particulier, le signal à porteuses multiples fenêtré $S_{WCP\text{-}GFDM}[k]$ est tel que :

$$s_{WCP-GFDM}[k] = \sum_{r=l-1}^{l+1} s[mod(k - L_{CP}, KN)]h[k - r(KN + L_{GI})]$$

avec : $s[k]$ le signal à porteuses multiples avant insertion du préfixe cyclique ;

*l* l'indice du bloc considéré ;

*h[k]* une fonction fenêtre ;

*r* un entier pris dans l'intervalle [*l* - 1,*l* + 1].

L'introduction d'un préfixe cyclique, ou plus généralement d'un intervalle de garde, offre à la fois la possibilité de conserver une orthogonalité parfaite (ou quasi parfaite selon le choix des paramètres) en présence d'un canal multi-trajet et de fournir un signal à porteuses multiples présentant une bonne densité spectrale de puissance par l'application d'une fenêtre.

Dans un autre mode de réalisation, l'invention concerne un dispositif de transmission de symboles de données complexes destiné à être mis en oeuvre dans un système de télécommunications, délivrant un signal à porteuses multiples.

Selon l'invention, un tel dispositif comprend un module de mise en forme d'au moins un bloc de *MxK* symboles de données complexes, avec *M* > 1 *et K* > 1, comprenant les modules suivants, activés pour au moins une colonne du bloc :

- un module de transformation des *M* symboles de données complexes de la colonne du domaine fréquentiel vers le domaine temporel, délivrant N symboles transformés, avec $N \geq M$ ;
- un module de répétition cyclique des *N* symboles transformés, délivrant *NK* symboles (transformés) répétés ;

- un module de filtrage par un filtre de mise en forme des *NK* symboles (transformés) répétés, délivrant *NK* symboles (transformés répétés) filtrés ; et

et un module de sommation des symboles (transformés répétés) filtrés obtenus pour les différentes colonnes du bloc, délivrant *NK* échantillons temporels formant le signal à porteuses multiples.

Un tel dispositif de transmission est notamment adapté à mettre en oeuvre le procédé de transmission décrit précédemment. Il s'agit par exemple d'une station de base d'un réseau cellulaire pour une communication sur voie descendante, ou d'un terminal de type ordinateur, téléphone, tablette, boîtier décodeur (en anglais « set-top box »), etc., pour une communication sur voie montante. Ce dispositif pourra bien sûr comporter les différentes caractéristiques relatives au procédé de transmission selon l'invention, qui peuvent être combinées ou prises isolément. Ainsi, les caractéristiques et avantages de ce dispositif sont les mêmes que ceux du procédé décrit précédemment. Par conséquent, ils ne sont pas détaillés plus amplement.

En particulier, la solution proposée permet la réalisation d'une transmission de type GFDM en utilisant un schéma différent de l'art antérieur, qui présente notamment une complexité inférieure aux schémas de l'art antérieur.

L'invention concerne également un procédé de réception d'un signal à porteuses multiples destiné à être mis en oeuvre dans un système de télécommunications, délivrant des symboles de données complexes estimés, ledit signal à porteuses multiples étant obtenu en mettant en forme, en émission, au moins un bloc de *MxK* symboles de données complexes, avec *M > 1* et *K > 1*.

Selon l'invention, le procédé de réception comprend une étape d'estimation d'au moins un symbole de données complexe du bloc, mettant en oeuvre les étapes suivantes :

- obtention d'un signal à porteuses multiples comprenant *NK* échantillons, avec $N \geq M$ ;
- filtrage par un filtre de mise en forme des *NK* échantillons, délivrant *NK* échantillons filtrés ;
- répartition des *NK* échantillons filtrés en *K* groupes de *N* échantillons filtrés ;
- sommation des échantillons filtrés des *K* groupes, délivrant *N* symboles filtrés ;
- transformation des *N* symboles filtrés du domaine temporel vers le domaine fréquentiel, délivrant *M* symboles de données complexes estimés.

L'invention propose ainsi une nouvelle technique pour la mise en oeuvre d'une réception de type GFDM, permettant d'estimer des symboles de données complexes d'au moins un bloc de symboles de données.

Comme déjà indiqué, la solution proposée permet une implémentation rapide d'un transmultiplexeur de type GFDM et offrant une complexité de réalisation réduite par rapport aux techniques de l'art antérieur. En particulier, la complexité du transmultiplexeur selon l'invention ne dépend pas du facteur d'étalement L.

Un tel procédé de réception est notamment adapté à recevoir un signal à porteuses multiples émis selon le procédé de transmission décrit ci-dessus. Les caractéristiques et avantages de ce procédé de réception sont les mêmes que ceux du procédé de transmission. Par conséquent, ils ne sont pas détaillés plus amplement.

En particulier, l'étape de transformation met en oeuvre une transformée de Fourier rapide de taille *NxN* et, si *N > M*, une extraction des *M* premiers symboles filtrés transformés, délivrant les M symboles de données complexes estimés.

On rappelle qu'un tel algorithme est particulièrement efficace et facilement implémentable, notamment dans un dispositif de réception, par exemple en utilisant un algorithme de type Cooley-Tukey ou de type Good.

En particulier, l'étape d'estimation d'au moins un symbole de données complexe du bloc délivre un symbole de données complexe estimé, à la position $(m_0,n_0)$, tel que :

$$y_{m_0,n_0} = \sum_{k=0}^{M-1} \sum_{l=0}^{K-1} s[k+lM]\tilde{g}[k+lM - n_0 N]e^{\frac{-j2\pi m_0(k-n_0 N)}{M}}$$

avec : *s[k]* le signal à porteuses multiples ;
$\tilde{g}[k]$ le filtre de mise en forme.

On peut ainsi écrire l'algorithme de réception sous forme mathématique, ce qui permet une implémentation directe d'un récepteur de type GFDM.

Selon un autre aspect, l'étape d'estimation d'au moins un symbole de données complexe du bloc délivre un symbole de données complexe estimé, à la position $(m_0, n_0)$, tel que :

$$\mathbf{y}_{N\times 1} = \mathbf{W}_{N\times N}^{H}\mathbf{E}_{NK\times N}^{T}\mathbf{D}_{NK\times NK}\mathbf{s}_{NK\times 1}$$

avec : $\mathbf{W}_{N\times N}^{H}$ la matrice représentative de l'étape de transformation du domaine temporel vers le domaine fréquentiel ;

$\mathbf{E}_{NK\times N}^{T} = [\mathbf{I}_{N\times N}\cdots\mathbf{I}_{N\times N}]_{N\times NK}$ la matrice représentative des étapes de répartition et sommation ;

$\mathbf{D}_{NK\times NK}$ = $diag(g^{k,n})$ la matrice représentative de l'étape de filtrage par le filtre de mise en forme $\tilde{g}[k]$, obtenu par répétition périodique d'un filtre prototype $g[k]$ sur une période $NK$ et tel que $\tilde{g}[k] = g[\mathrm{mod}(k,NK)]$, avec $g^{k,n}$ les coefficients du filtre de mise en forme, $diag\{.\}$ l'opérateur d'extraction des éléments diagonaux d'une matrice, $0 \le n \le K$ - 1, et $0 \le k \le NK$ - 1;

$\mathbf{s}_{NK\times 1}$ un vecteur représentatif des $NK$ échantillons du signal à porteuses multiples ;

$(.)^{T}$ l'opérateur de transposition matricielle ;

$(.)^{H}$ l'opérateur de transposition et conjugaison matricielle.

On peut ainsi écrire l'algorithme de réception sous forme matricielle, ce qui permet une mise en oeuvre simple et efficace d'un récepteur de type GFDM.

Selon une caractéristique particulière de l'invention, le procédé de réception comprend en outre une étape préalable de suppression d'un intervalle de garde.

En particulier, préalablement à l'étape d'estimation, le procédé de réception met en oeuvre les étapes suivantes :

-  suppression, dans le signal à porteuses multiples, d'une première portion d'un préfixe cyclique de longueur $L_{CP}$ = $L_{GI}$ + $L_{RI}$ inséré en émission, ladite première portion présentant une longueur $L_{GI}$ et étant utilisée pour absorber l'interférence due au canal de transmission ;
-  décalage cyclique du signal à porteuses multiples obtenu à l'issue de l'étape de suppression, tel que $s[k] = s[mod(k + L_{GI}, KN)]$, délivrant $NK$ échantillons temporels ;
-  transformation des $NK$ échantillons temporels du domaine temporel vers le domaine fréquentiel, délivrant $NK$ échantillons fréquentiels ;
-  égalisation des $NK$ échantillons fréquentiels, délivrant $NK$ échantillons égalisés ;
-  transformation des $NK$ échantillons égalisés du domaine fréquentiel vers le domaine temporel.

Selon cet exemple, l'égalisation est donc mise en oeuvre avant la démodulation GFDM.

En variante, selon une autre caractéristique particulière de l'invention, le procédé de réception met en oeuvre, préalablement à l'étape d'estimation, les étapes suivantes :

-  suppression, dans le signal à porteuses multiples, d'une première portion d'un préfixe cyclique de longueur $L_{CP}$ = $L_{GI}$ + $L_{RI}$ inséré en émission, ladite première portion présentant une longueur $L_{GI}$ et étant utilisée pour absorber l'interférence due au canal de transmission ;
-  décalage cyclique du signal à porteuses multiples obtenu à l'issue de l'étape de suppression, tel que $s[k] = s[mod(k + L_{GI}, KN)]$, délivrant $NK$ échantillons temporels ;

De plus, l'étape d'estimation met en oeuvre une étape d'égalisation des symboles transformés.

Selon cet exemple, l'égalisation est donc mise en oeuvre après la démodulation GFDM.

Dans un autre mode de réalisation, l'invention concerne un dispositif de réception d'un signal à porteuses multiples destiné à être mis en oeuvre dans un système de télécommunications, délivrant des symboles de données complexes estimés, ledit signal à porteuses multiples étant obtenu en mettant en forme, en émission, au moins un bloc de $M\times K$ symboles de données complexes, avec $M > 1$ et $K > 1$.

Selon l'invention, un tel dispositif de réception comprend un module d'estimation d'au moins un symbole de données complexe du bloc, comprenant :

-  un module d'obtention d'un signal à porteuses multiples comprenant $NK$ échantillons, avec $N \ge M$ ;
-  un module de filtrage par un filtre de mise en forme des $NK$ échantillons, délivrant $NK$ échantillons filtrés ;
-  un module de répartition des $NK$ échantillons filtrés en $K$ groupes de $N$ échantillons filtrés ;
-  un module de sommation des échantillons filtrés des $K$ groupes, délivrant $N$ symboles filtrés ;
-  un module de transformation des $N$ symboles filtrés du domaine temporel vers le domaine fréquentiel, délivrant $M$ symboles de données complexes estimés.

Un tel dispositif de réception est notamment adapté à mettre en oeuvre le procédé de réception décrit précédemment. Il s'agit par exemple d'une station de base d'un réseau cellulaire pour une communication sur voie montante, ou d'un terminal de type ordinateur, téléphone, tablette, boîtier décodeur, etc., pour une communication sur voie descendante. Ce dispositif pourra bien sûr comporter les différentes caractéristiques relatives au procédé de réception selon l'invention, qui peuvent être combinées ou prises isolément. Ainsi, les caractéristiques et avantages de ce dispositif sont les mêmes que ceux du procédé décrit précédemment. Par conséquent, ils ne sont pas détaillés plus amplement.

L'invention concerne encore un ou plusieurs programmes d'ordinateur comportant des instructions pour la mise en oeuvre d'un procédé de transmission tel que décrit ci-dessus lorsque ce ou ces programmes sont exécutés par un processeur, et un ou plusieurs programmes d'ordinateur comportant des instructions pour la mise en oeuvre d'un procédé de réception tel que décrit ci-dessus lorsque ce ou ces programmes sont exécutés par un processeur.

Les procédés selon l'invention peuvent donc être mis en oeuvre de diverses manières, notamment sous forme câblée et/ou sous forme logicielle.

L'invention concerne aussi un ou plusieurs supports d'informations lisibles par un ordinateur, et comportant des instructions d'un ou plusieurs programmes d'ordinateur tels que mentionné ci-dessus.

## 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :

- la figure 1 présente un transmultiplexeur de type GFDM selon l'art antérieur ;
- la figure 2 présente les principales étapes mises en oeuvre par le procédé de transmission selon un mode de réalisation particulier de l'invention ;
- le figure 3 illustre les principales étapes mises en oeuvre par le procédé de réception selon un mode de réalisation particulier de l'invention ;
- la figure 4 illustre un exemple de transmetteur de type GFDM mettant en oeuvre les étapes de la figure 2 ;
- les figures 5A et 5B présentent un exemple de récepteur de type GFDM mettant en oeuvre les étapes de la figure 3 ;
- la figure 6 compare les performances des techniques de transmission de type OFDM et des techniques de transmission de type GFDM, avec ou sans implémentation d'une technique d'optimisation du filtre de mise en forme ;
- les figures 7 et 8 illustrent respectivement la structure simplifiée d'un dispositif de transmission mettant en oeuvre une technique de transmission, et un dispositif de réception mettant en oeuvre une technique de réception selon un mode de réalisation particulier de l'invention ;
- la figure 9 illustre un mode de réalisation particulier de l'invention reposant sur l'insertion d'un préfixe cyclique et d'un fenêtrage ;
- les figures 10 et 11 présentent deux exemples d'implémentation d'un récepteur selon le mode de réalisation particulier de l'invention reposant sur l'insertion d'un préfixe cyclique et d'un fenêtrage.

## 5. Description d'un mode de réalisation de l'invention

*5.1 Principe général*

Le principe général de l'invention repose sur une nouvelle technique pour la mise en oeuvre d'une transmission/réception de type GFDM, mettant en oeuvre côté émission une transformation des symboles de données complexes (pouvant éventuellement présenter une partie imaginaire nulle) du domaine fréquentiel vers le domaine temporel, préalablement à l'étape de filtrage.

Ceci permet notamment de mettre en oeuvre l'opération de filtrage en temps et non en fréquence, et évite ainsi le calcul d'une transformée du domaine fréquentiel vers le domaine temporel de grande taille à la dernière étape de l'algorithme de transmission.

En particulier, l'invention propose un filtre de mise en forme modifié, présentant des paramètres d'étalement ($L$) et un facteur de retombée $\alpha$ (en anglais « roll-off ») spécifiques permettant de s'approcher d'un système orthogonal.

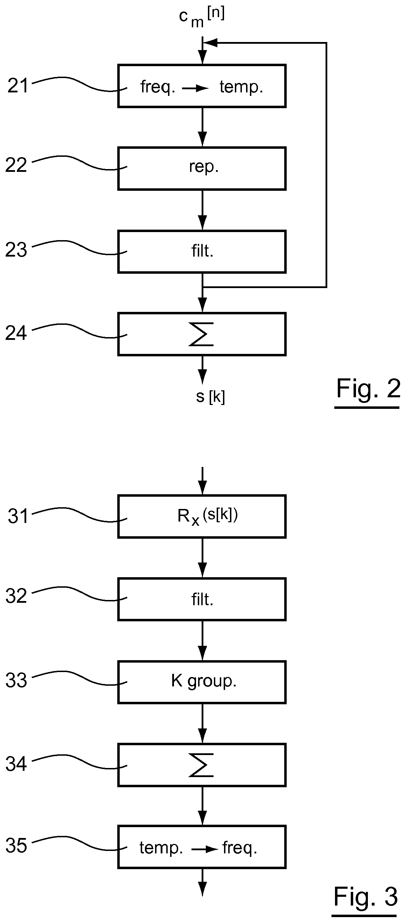

On présente ci-après, en relation avec la figure 2, les principales étapes mises en oeuvre par un procédé de transmission selon un mode de réalisation de l'invention.

Un tel procédé reçoit en entrée au moins un bloc de *MxK* symboles de données, avec $M > 1$ et $K > 1$, qui peuvent être à valeurs réelles ou à valeurs complexes. Ces symboles de données sont notés $c_m[n]$, avec n l'indice du symbole de données dans l'intervalle temporel (en anglais « slot », i.e. de la colonne du bloc), $0 \leq n \leq K - 1$, et m l'indice de la sous-porteuse (i.e. de la ligne du bloc), $0 \leq m \leq M - 1$.

Pour la mise en forme d'un bloc de *MxK* symboles de données, le procédé met en oeuvre une succession d'étapes, pour au moins une colonne n du bloc de symboles de données, et plus généralement pour l'ensemble des colonnes du bloc.

Plus précisément, au cours d'une première étape 21, les *M* symboles de données de la *n*-ième colonne du bloc sont transformés du domaine fréquentiel vers le domaine temporel, de façon à obtenir *N* symboles transformés, avec $N \geq M$.

En particulier, on note que si *N* > *M*, la *n*-ième colonne du bloc peut être complétée par des symboles nuls, de façon à utiliser une transformée du domaine fréquentiel vers le domaine temporel de taille $N \times N$.

Ensuite, au cours d'une deuxième étape 22, une répétition cyclique des *N* symboles transformés est mise en oeuvre, délivrant *NK* symboles transformés répétés. En d'autres termes, on répète *K* fois les *N* symboles transformés.

Au cours d'une troisième étape 23, les *NK* symboles transformés répétés sont filtrés par un filtre de mise en forme, délivrant *NK* symboles transformés répétés filtrés, encore appelés plus simplement symboles filtrés.

Ces trois étapes peuvent être répétées pour les différentes colonnes du bloc de symboles.

Finalement, au cours d'une quatrième étape 24, on somme les symboles filtrés obtenus pour les différentes colonnes du bloc, pour obtenir *NK* échantillons temporels formant le signal à porteuses multiples. En d'autres termes, on additionne le premier symbole filtré obtenu pour la première colonne du bloc, le premier symbole filtré obtenu pour la deuxième colonne du bloc, ..., le premier symbole filtré obtenu pour la *K*-ième colonne du bloc, de façon à obtenir un premier échantillon temporel. On additionne ensuite le deuxième symbole filtré obtenu pour la première colonne du bloc, le deuxième symbole filtré obtenu pour la deuxième colonne du bloc, ..., le deuxième symbole filtré obtenu pour la *K*-ième colonne du bloc, de façon à obtenir un deuxième échantillon temporel. On procède ainsi de suite pour les *NK* symboles filtrés, de façon à obtenir *NK* échantillons temporels, formant le signal à porteuses multiples.

Les principales étapes mises en oeuvre par un procédé de réception d'un signal à porteuses multiples obtenu en mettant en forme, en émission, au moins un bloc de *MxK* symboles de données, avec *M* > 1 et *K* > 1, selon un mode de réalisation de l'invention, sont illustrées en figure 3.

Plus précisément, pour l'estimation d'au moins un symbole de données du bloc, le procédé de réception met en oeuvre une succession d'étapes.

Ainsi, au cours d'une première étape 31, on obtient un signal à porteuses multiples comprenant *NK* échantillons, avec $N \geq M$.

Au cours d'une deuxième étape 32, on applique un filtrage par un filtre de mise en forme des *NK* échantillons, délivrant *NK* échantillons filtrés.

Au cours d'une troisième étape 33, les *NK* échantillons filtrés sont répartis en *K* groupes comprenant chacun *N* échantillons filtrés. Par exemple, les *N* premiers échantillons filtrés appartiennent à un premier groupe, les N échantillons filtrés suivants appartiennent à un deuxième groupe, et ainsi de suite, et les *N* derniers échantillons filtrés appartiennent à un *K*-ième groupe.

Au cours d'une quatrième étape 34, les échantillons filtrés des K groupes sont sommés, délivrant *N* symboles filtrés. En d'autres termes, on additionne le premier échantillon filtré du premier groupe, le premier échantillon filtré du deuxième groupe, ..., le premier échantillon filtré du *K*-ième groupe, de façon à obtenir un premier symbole filtré. On additionne le deuxième échantillon filtré du premier groupe, le deuxième échantillon filtré du deuxième groupe, ..., le deuxième échantillon filtré du *K*-ième groupe, de façon à obtenir un deuxième symbole filtré. On procède ainsi de suite pour les *NK* échantillons filtrés, de façon à obtenir *N* symboles filtrés.

Au cours d'une étape 35 suivante, on transforme les *N* symboles filtrés du domaine temporel vers le domaine fréquentiel, de façon à obtenir *M* symboles de données estimés.

En particulier, on note que *si N* > *M,* on peut extraire les *M* premiers symboles filtrés issus de l'étape de transformation, de façon à utiliser une transformée du domaine temporel vers le domaine fréquentiel de taille $N \times N$.

*5.2 Description d'un mode de réalisation particulier*

On décrit ci-après un exemple d'implémentation de l'invention, pour la transmission d'au moins un bloc de symboles de données selon une technique de type GFDM.

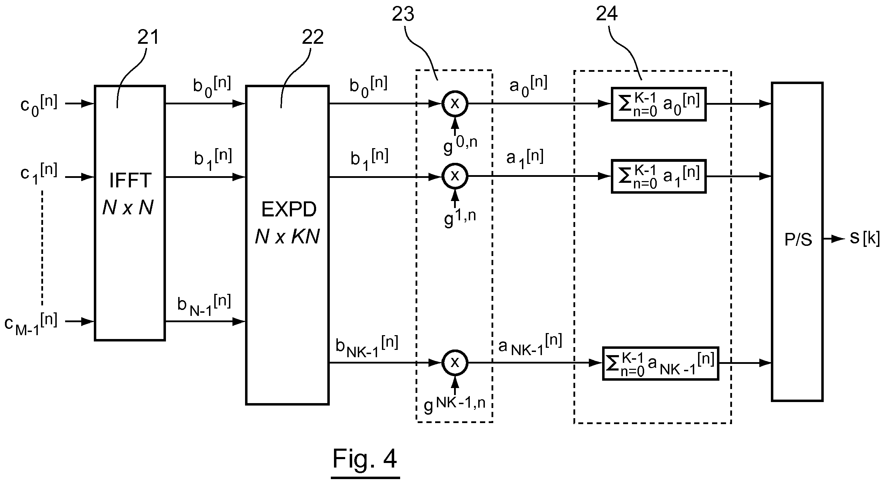

Selon cet exemple, illustré en figure 4, la solution proposée repose sur la mise en oeuvre préalable d'une transformation de type IDFT 21 pour chaque ensemble de *M* symboles de données $c_m[n]$ (i.e. chaque colonne du bloc de symboles de données) alimentant *M* sous-porteuses. Les coefficients résultant de cette opération sont ensuite filtrés temporellement 23, après répétition/extension cyclique 22.

Ceci revient à exprimer, pour $0 \leq k \leq NK - 1$, l'expression du signal GFDM multiporteuse en bande de base sous la forme suivante :

$$s[k] = \sum_{n=0}^{K-1} \underbrace{\sum_{m=0}^{M-1} c_m[n] e^{\frac{j2\pi km}{M}}}_{b_k[n]} \tilde{g}[k - nN]$$

$$\underbrace{\phantom{\sum_{n=0}^{K-1} \sum_{m=0}^{M-1} c_m[n] e^{\frac{j2\pi km}{M}} \tilde{g}[k - nN]}}_{\text{filtrage}}$$

avec : $\tilde{g}[k]$ un filtre de mise en forme, obtenu par répétition périodique du filtre prototype $g[k]$ sur une période $NK$ : $\tilde{g}[k]$ = $g[\mathrm{mod}(k,NK)]$.

Plus précisément, les sorties modulées $b_k[n]$, pour $k \in [0,N$ - $1]$, encore appelées symboles transformés, peuvent être obtenues en appliquant aux M symboles de données, complétés par $(N$ - $M)$ symboles nuls si $N > M$, une IDFT 21 de taille $N$ selon l'axe des fréquences.

Ces sorties modulées $b_k[n]$ peuvent ensuite être étendues 22 de manière cyclique sur l'intervalle $k \in [0,KN$ - $1]$ par la relation :

$$b_k[n] = b_{k+N}[n]$$

de façon à obtenir $NK$ symboles répétés.

Ces $NK$ symboles répétés peuvent ensuite être filtrés 23. Pour ce faire, on peut se baser sur le principe de filtrage polyphase, tel que notamment rappelé dans le document « Multirate systems and filter banks » (P. P. Vaidyanathan, Prentice Hall, Englewood Cliffs, New-York, New Jersey, 1993, chapitre 4), il est possible de réduire le coût de l'opération de filtrage par le filtre de mise en forme $\tilde{g}[k]$. Ainsi, comme illustré en figure 4, on multiplie chaque symbole répété $b_k[n]$, pour $0 \le k \le NK$ - $1$, par un coefficient $g^{k,n}$ du filtre de mise en forme, de façon à obtenir $NK$ symboles filtrés, notés $\alpha_k[n]$, pour $0 \le k \le NK$ - $1$.

On peut noter que les coefficients $g^{k,n}$ du filtre de mise en forme, décalés à chaque intervalle temporel d'indice n, peuvent se déduire de l'expression du filtre prototype avec différents indiçages. Donc une fois que les variables $M$, $N$ et $K$ sont fixées, les coefficients du filtre de mise en forme peuvent être pré-calculés (par exemple hors-ligne) et stockés dans des tables pour n = 0 ⋯ $K$ - $1$.

Par ailleurs, l'opération de répétition cyclique / expansion 23 est simplement proposée à titre illustratif. En pratique, il n'est pas nécessaire d'allouer des mémoires additionnelles pour le stockage des données à recopier, il suffit d'utiliser les mêmes données périodiquement.

Les symboles filtrés $\alpha_k[n]$ sont ensuite sommés, branche par branche, de façon à additionner tous les premiers symboles filtrés obtenus pour les différentes colonnes du bloc, selon l'équation $\sum_{n=0}^{K-1} \alpha_0[n]$, puis tous les deuxièmes symboles filtrés obtenus pour les différentes colonnes du bloc, selon l'équation $\sum_{n=0}^{K-1} \alpha_1[n]$, etc, et finalement tous les derniers symboles filtrés obtenus pour les différentes colonnes du bloc, selon l'équation $\sum_{n=0}^{K-1} \alpha_{NK-1}[n]$.

Il est également possible d'exprimer l'expression du signal GFDM multiporteuse sous forme matricielle :

$$\mathbf{s}_{NK \times 1} = diag\left\{ \mathbf{G}_{NK \times K} \underbrace{(\mathbf{E}_{NK \times N} \mathbf{W}_{N \times N} \mathbf{C}_{N \times K})^T}_{\mathbf{Q}_{K \times NK}} \right\}$$

avec : $C_{N \times K} = \{c_m[n]\}_{N \times K}$ la matrice de symboles de données de taille $NxK$, complétée par des symboles nuls si $N > M$, avec pour indices d'entrée $m \in [0, M$ - $1]$ et n $\in [0,K$ - $1]$ ;

$$\mathbf{W}_{N \times N} = \left\{ e^{\frac{j2\pi km}{M}} \right\}_{N \times N}$$ la matrice IDFT de taille $N \times N$, avec pour indices d'entrée $(m,k) \in [0,N$ - $1]$ ;

$E_{NK \times N}$ la matrice représentative de la répétition cyclique, de taille $NK \times N$, telle que

$$\mathbf{E}_{NK \times N}^T = [\mathbf{I}_{N \times N} \cdots \mathbf{I}_{N \times N}]_{N \times NK} \; ;$$

$\mathbf{G}_{NK \times K} = \{g^{k,n}\}_{NK \times K} = \{g[\mathrm{mod}(k$ - $nN,NK)]\}_{NK \times K}$ la matrice représentative du filtrage par le filtre de mise en forme $\tilde{g}[k]$, encore appelée matrice polyphase circulante, de taille $NK \times K$, pour $k \in [0,NK$ - $1]$ et n $\in [0,K$ - $1]$ ;

$(.~)^T$ l'opérateur de transposition matricielle ;

$diag\{.\}$ l'opérateur d'extraction des éléments diagonaux d'une matrice.

Pour aboutir à une implémentation efficace, un algorithme IFFT est appliqué pour le calcul des IDFT, tandis que l'opération d'expansion par N ne nécessite pas de calculs. Par ailleurs, l'opération d'extraction des termes diagonaux suggère que seules les opérations concernant les éléments diagonaux de $\mathbf{G}_{NK \times K}\mathbf{Q}_{K \times NK}$ sont à calculer, i.e. pour $s[k]$ avec $k \in [0, NK - 1]$, seule la multiplication entre la k-ième ligne du vecteur de $\mathbf{G}_{NK \times K}$ et la k-ième colonne du vecteur de $\mathbf{Q}_{K \times NK}$ est à prendre en compte.

En termes de complexité, on constate que la solution proposée permet de réduire le nombre de multiplications complexes, en se ramenant à K calculs d'IFFT de taille $N$ ainsi qu'à $K$ multiplications entre les sorties de la IFFT et les coefficients $g^{k,n}$ du filtre de mise en forme. En supposant, que le filtre prototype $g[k]$ a des coefficients à valeurs réelles, chacune des multiplications est comptabilisée pour 1/2 multiplication complexe. Ainsi, selon le mode de réalisation illustré en figure 4, la complexité totale pour produire un bloc GFDM s'élève, en nombre de multiplications complexes à :

$$CM_{inv} = (KN\log_2 N + K^2 N)/2$$

De plus, pour les intervalles temporels/« slots » inactifs, l'algorithme proposé permet directement de réduire la complexité. En effet, de manière similaire à l'OFDM, du fait que l'algorithme proposé utilise une IFFT sur l'axe des fréquences, il existe une indépendance entre les différents « slots » temporels. Pour cette raison la complexité peut se réduire en ne considérant que les $K$ « slots » actifs.

Par ailleurs, les performances obtenues en utilisant un système de transmission de type GFDM selon l'invention sont similaires à celles obtenues avec une implémentation directe du GFDM.

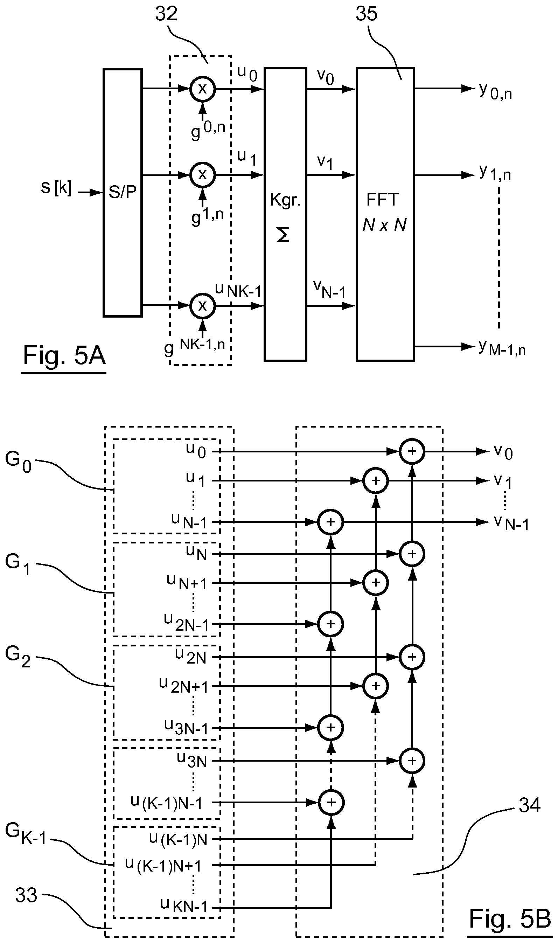

On décrit désormais, en relation avec les figures 5A et 5B, un exemple d'implémentation de l'invention pour la réception d'un signal à porteuses multiples transmis selon une technique de type GFDM. Selon cet exemple, on réalise un processus inverse à celui mis en oeuvre côté émission.

L'expression générale pour l'estimation d'au moins un symbole de données, pour un bloc, à la position $(m_0,n_0)$ dans le plan temps-fréquence, est donnée par :

$$y_{m_0,n_0} = \sum_{k=0}^{KN-1} s[k]\tilde{g}^*_{m_0,n_0}[k]$$

avec : $s[k]$ le signal à porteuses multiples de type GFDM.

En développant l'expression $\tilde{g}_{m0,n0}$, on obtient :

$$y_{m_0,n_0} = \sum_{k=0}^{MK-1} s[k]\tilde{g}[k - n_0 N]e^{\frac{-j2\pi m_0 k}{M}}$$

$$y_{m_0,n_0} = \sum_{k=0}^{M-1} \underbrace{\underbrace{\sum_{l=0}^{K-1} s[k + lM]\tilde{g}[k + lM - n_0 N]}_{filtrage} e^{\frac{-j2\pi m_0 (k-n_0 N)}{M}}}_{FFT}$$

Plus précisément, selon l'exemple illustré en figure 5A, les $NK$ échantillons du signal à porteuses multiples reçu $s[k]$ sont filtrés (32), en multipliant chaque échantillon indicé $k$, pour $0 \le k \le NK - 1$, par un coefficient $g^{k,n}$ du filtre de mise en forme, de façon à obtenir $NK$ échantillons filtrés, notés $u_k$.

Comme illustré en figure 5B, ces échantillons filtrés $u_k$ sont répartis 33 dans $K$ groupes de N échantillons filtrés, notés $G_0, G_1, ..., G_{K-1}$. On additionne 34 ensuite les échantillons filtrés des $K$ groupes $G_0, G_1, ..., G_{K-1}$, de façon à obtenir $N$ symboles filtrés, notés $v_k$, pour $0 \le k \le K - 1$. Par exemple, on additionne ensemble les premiers échantillons filtrés des groupes $G_0, G_1, ..., G_{K-1}$, puis on additionne ensemble les deuxièmes échantillons filtrés des groupes $G_0, G_1, ..., G_{K-1}$, etc, et finalement on additionne ensemble les derniers échantillons filtrés des groupes $G_0, G_1, ..., G_{K-1}$.

Les N symboles filtrés sont alors transformés 35 du domaine temporel vers le domaine fréquentiel. Si $N > M$, alors on obtient N symboles transformés, et on conserve uniquement les M premiers symboles transformés, correspondant aux $M$ symboles de données estimés.

Il est également possible d'exprimer l'expression des symboles de données estimés sous forme matricielle :

$$\mathbf{y}_{N \times 1} = \mathbf{W}_{N \times N}^{H} \mathbf{E}_{NK \times N}^{T} \mathbf{D}_{NK \times NK} \mathbf{s}_{NK \times 1}$$

avec : $\mathbf{W}_{N \times N}^{H}$ la matrice représentative de la transformation DFT, de taille $N \times N$, avec pour indices d'entrée $(m, k)$ $\in [0, N - 1]$ ;

$\mathbf{E}_{NK \times N}^{T} = [\mathbf{I}_{N \times N} \cdots \mathbf{I}_{N \times N}]_{N \times NK}$ la matrice représentative des étapes de répartition et sommation ;

$\mathbf{D}_{NK \times NK} = diag(g^{k,n})$ la matrice représentative du filtrage par le filtre de mise en forme $\tilde{g}[k]$, obtenu par répétition périodique d'un filtre prototype $g[k]$ sur une période $NK$ et tel que $\tilde{g}[k] = g[\text{mod}(k, NK)]$, avec $g^{k,n}$ les coefficients du filtre de mise en forme, $diag\{.\}$ l'opérateur d'extraction des éléments diagonaux d'une matrice, de taille $NK \times NK$, pour $k \in [0, NK - 1]$ et $n \in [0, K - 1]$ ;

$\mathbf{s}_{NK \times 1}$ un vecteur représentatif des $NK$ échantillons du signal à porteuses multiples ;

$(.)^{T}$ l'opérateur de transposition matricielle ;

$(.)^{H}$ l'opérateur de transposition et conjugaison matricielle.

*5.3 Variante d'implémentation*

On présente ci-après une variante d'implémentation, permettant notamment de générer un système de type GFDM quasi-orthogonal.

On rappelle que l'algorithme du SoA, tel que présenté en relation avec l'art antérieur, effectue la mise en forme spectrale circulaire dans le domaine fréquentiel. En particulier, dans le document *« Generalized Frequency Division Multiplexing : Analysis of an Alternative Multi- Carrier Technique for Next Generation Cellular Systems »* précité, on utilise un filtre de mise en forme en racine de cosinus surélevé (en anglais SRRC pour « square-root raised cosine ») de longueur $NK$ pour cette opération de filtrage. Du fait que plusieurs coefficients du filtre SRRC sont quasiment nuls dans le domaine fréquentiel, la complexité peut être réduite facilement en ne considérant que le support L des coefficients non nuls. En particulier, comme décrit en relation avec l'art antérieur, la complexité de l'algorithme du SoA dépend du support L, encore appelé facteur d'étalement. Dans l'exemple d'un filtre de mise en forme de type SRRC, ce support *L* est fixé à 2.

On propose, selon une variante d'implémentation, que ce facteur d'étalement soit déterminé en tenant compte des valeurs prises par les autres paramètres du système de transmission.

En particulier, on note que dans un système de transmission de type GFDM, où chaque sous-porteuse est suréchantillonnée par un facteur $N$ et comprend des intervalles temporels (« slots ») de $K$ symboles, la longueur du filtre SRRC est égale à $NK$ (i.e. le filtre de mise en forme comprend $NK$ coefficients notés $g^{k,n}$, pour $k \in [0, NK - 1]$. En conséquence sa bande passante effective en Hertz vaut $BW = \frac{1 + \alpha}{N T_s}$, avec :

$\alpha$ le facteur de retombée du filtre et
$T_s$ la période d'échantillonnage (en secondes).

Quand les coefficients fréquentiels du filtre SRRC sont calculés par une DFT de taille $NK$, cela signifie que la résolution fréquentielle est $\left(\frac{1}{NKT_s}\right)$, si bien que la valeur approchée du paramètre de support s'exprime par :

$$L_{\text{approx}} = 2 \left\lceil \frac{K(1 + \alpha)}{2} \right\rceil - 1$$

avec $\lceil . \rceil$ la valeur entière par excès.

Or l'optimisation du paramètre L peut éventuellement transformer un système GFDM non-orthogonal en un système GFDM quasi-orthogonal.

Pour ce faire, on démontre ci-après que la valeur du support résulte d'un compromis en choisissant un facteur d'étalement tel que $L < L_{\text{approx}}$. En réduisant la valeur de $L$ en annulant les coefficients de bord, par rapport à $L_{\text{approx}}$, l'interférence entre sous-porteuses (en anglais ICI pour « inter-carrier interference ») produite par les porteuses voisines est naturellement annulée. Par contre le filtre prototype devient un filtre SRRC modifié qui ne respecte plus la condition de Nyquist, ce qui entraîne pour chaque sous- porteuse une perte d'orthogonalité le long de l'axe temporel (interférence entre symboles, en anglais ISI pour « inter-symbol interference »). En conséquence, plus on annule de coefficients de bord plus l'interférence entre sous porteuses est réduite, mais plus l'interférence entre symboles augmente. Une analyse approfondie de ce compromis montre qu'il existe une valeur seuil de *L*, pour laquelle l'interférence entre sous-porteuses est complètement annulée. Mais si, au delà de cette valeur seuil, on continue à réduire *L,* le seul effet est d'accroître l'interférence entre symboles.

Cette valeur seuil s'exprime par :

$$L_{\text{thres}} = L_{\text{approx}}(\alpha = 0) = 2\left\lceil\frac{K}{2}\right\rceil - 1$$

En conséquence, il est possible de jouer sur ce paramètre de support pour atteindre une performance optimale. Cette technique est notée ci-après SFM, pour « Span-Factor Manipulation ».

Cette technique SFM tend à favoriser les filtres SRRC présentant un facteur de retombée de faible valeur, puisque dans ce cas les coefficients de bords sont nettement plus faibles comparé à ceux situés près des sous-porteuses centrales. De ce fait, les annuler n'affecte qu'assez peu la condition de Nyquist pour le système résultant, alors que l'interférence entre sous-porteuses est réduite.

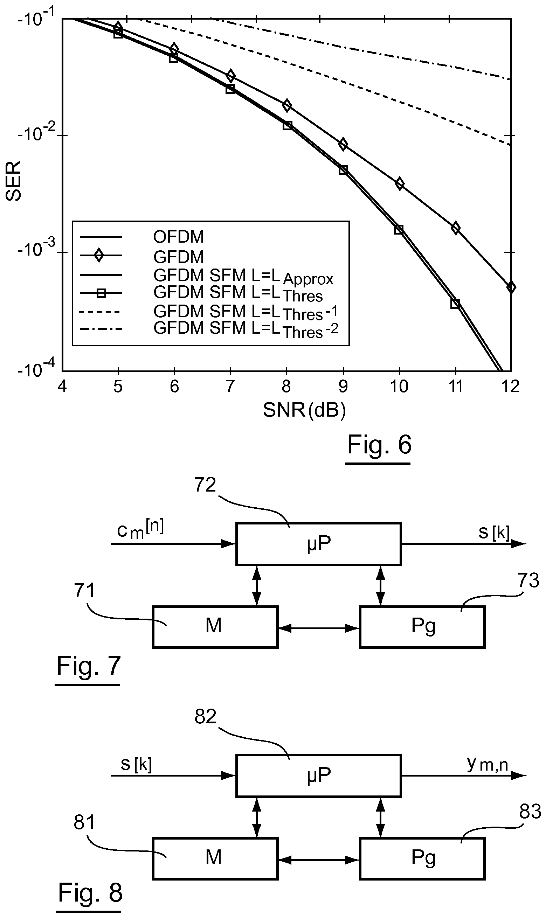

La figure 6 illustre notamment les performances d'un système de transmission GFDM utilisant un filtre adapté, avec et sans SFM, et les performances d'un système de transmission OFDM, dans le cas d'une transmission dans un canal perturbé par un bruit blanc gaussien (AWGN), avec $M = N = 128$, $K = 15$ et $\alpha = 0{,}1$.

On constate sur cette figure 6 que l'on peut passer d'un système reconnu comme non orthogonal (GFDM sans SFM), à un système quasi-orthogonal en choisissant un support égal à la valeur seuil $L_{\text{thres}}$. En effet, les courbes représentatives du taux d'erreur (en anglais SER pour « symbol error rate ») en fonction du rapport signal à bruit (en anglais SNR pour « Signal to Noise Ratio ») pour la transmission OFDM (courbe OFDM) et la transmission de type GFDM avec un facteur d'étalement $L = L_{\text{thres}}$ (courbe GFDM SFM $L = L_{\text{thres}}$) se superposent quasiment.

Par ailleurs, comme prévu, réduire la longueur du support L en dessous de cette valeur seuil se traduit par une dégradation des performances (courbes GFDM SFM $L = L_{\text{thres}}$ - 1 et GFDM SFM L = $L_{\text{thres}}$ - 2).

De manière contrastée, pour les filtres SRRC présentant un facteur de retombée de valeur élevée, plusieurs coefficients près des bords prennent des valeurs élevées, si bien que leur annulation provoque un changement notable dans le filtre SRRC, qui viole alors sévèrement le critère de Nyquist. On constate que le SFM fonctionne toujours correctement pour un tel système GFDM mais s'avère moins performant que dans le cas d'un facteur de retombée à faible valeur. En effet, le SFM augmente alors l'interférence entre symboles sur chaque porteuse.

On peut noter qu'une telle technique d'optimisation de la valeur du paramètre de support (SFM) peut être mise en oeuvre pour déterminer les coefficients du filtre de mise en forme utilisé dans les techniques de transmission et de réception de type GFDM décrites selon l'invention, ou bien dans les techniques de transmission et de réception de type GFDM selon l'art antérieur, et notamment selon la technique SoA.

De plus, dans un cas comme dans l'autre, le SFM n'a pas d'impact sur la complexité du système car il peut s'effectuer hors-ligne.

En particulier, on note que le nombre de symboles de données par « slot », *K*, n'est pas nécessairement une puissance entière de 2. En fait, l'analyse du support du filtre SRRC a montré que pour les faibles valeurs de *K* (de l'ordre de $K < 20$), la valeur obtenue est toujours impaire car le support doit être symétrique par rapport à la fréquence centrale des sous-porteuses.

*5.4 Amélioration de la densité spectrale de puissance*

Quel que soit le schéma retenu pour l'implémentation d'un transmetteur GFDM, il est possible d'insérer dans le signal à porteuses multiples *s[k]*, préalablement à sa transmission, un préfixe cyclique ou plus généralement un intervalle de garde, noté CP, permettant d'annuler l'interférence inter-bloc du système GFDM, et donc d'obtenir une orthogonalité quasi-parfaite dans le cas d'un canal multi-trajet.

En outre, pour éviter que la fuite spectrale due au traitement par bloc se traduise par une mauvaise densité spectrale de puissance, on propose selon un mode de réalisation particulier de l'invention d'appliquer un fenêtrage après l'opération d'insertion du préfixe cyclique.

On obtient ainsi un signal à porteuses multiples fenêtré, dénommé WCP-GFDM.

On considère un préfixe cyclique de longueur $L_{\text{CP}}$, telle que $L_{\text{CP}} = L_{\text{GI}} + L_{\text{RI}}$, avec $L_{\text{GI}}$ la longueur d'une première portion du préfixe cyclique utilisée pour absorber l'interférence due au canal de transmission (qui peut éventuellement être égale à zéro) et $L_{\text{RI}}$ la longueur d'une deuxième portion du préfixe cyclique utilisée pour améliorer le spectre de puissance du signal à porteuses multiples, i.e. la longueur de la deuxième portion du préfixe cyclique dévolue au fenêtrage (qui est nécessairement supérieure à zéro et inférieure ou égale à $L_{\text{GI}}$).

En particulier, le *l*-ième bloc du signal à porteuses multiples fenêtré $s_{WCP\text{-}GFDM}[k]$, pour $k = 0 \cdots KN + L_{\text{CP}} - 1$, peut être obtenu pour le *l*-ième bloc du signal à porteuses avant insertion du préfixe cyclique précédemment noté *s[k]*,

pour *k* = 0 ··· *KM* - 1, par l'expression suivante :

$$s_{WCP-GFDM}[k] = \sum_{r=l-1}^{l+1} s[\mathrm{mod}(k - L_{\mathrm{CP}}, KN)]h[k - r(KN + L_{\mathrm{GI}})]$$

avec : *s[k]* le signal à porteuses multiples avant insertion du préfixe cyclique ;
*l* l'indice du bloc considéré ;
*h[k]* une fonction fenêtre, définie dans l'intervalle *k* = 0 ··· *KN* + *L*$_{CP}$ - 1 ;
r un entier pris dans l'intervalle [*l* - 1,*l* + 1].

Par exemple, la fonction fenêtre *h[k]* est définie comme suit :

$$h[k] = \begin{cases} \text{coefficients de fenêtrage} & si\ k \in [0, L_{\mathrm{RI}} - 1] \\ h[KN + L_{\mathrm{CP}} - 1 - k] & si\ k \in [KN + L_{\mathrm{CP}} - L_{\mathrm{RI}}, KN + L_{\mathrm{CP}} - 1] \\ 1 & sinon \end{cases}$$

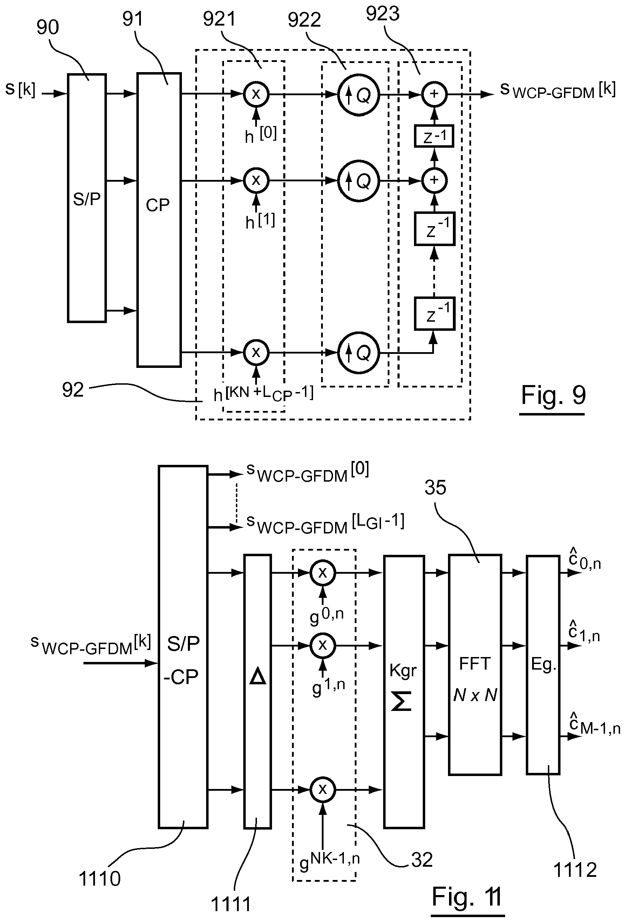

où les coefficients de fenêtrage dépendent du fenêtrage choisi (par exemple de type Hamming, Hanning, etc.).
Ainsi, comme illustré en figure 9, le procédé de transmission met également en oeuvre, selon un mode de réalisation de l'invention, une étape d'insertion 91 d'un préfixe cyclique devant au moins un échantillon temporel formant le signal à porteuses multiples *s[k]*( obtenu selon le schéma de la figure 1 pour une implémentation directe ou selon le schéma de la figure 4 pour une implémentation à complexité réduite), et éventuellement une étape de fenêtrage 92.
Plus précisément, l'étape de fenêtrage 92 met en oeuvre :

- une multiplication 921 de chacun des *NK* échantillons temporels formant le signal à porteuses multiples et du préfixe cyclique par un coefficient de fenêtrage, délivrant *KN* + *L*$_{CP}$ échantillons fenêtrés ;
- un suréchantillonnage 922, par un facteur de suréchantillonnage *Q* = *KN* + *L*$_{GI}$, des échantillons fenêtrés, délivrant *KN* + *L*$_{CP}$ échantillons suréchantillonnés ;
- un décalage et une sommation 923 des échantillons suréchantillonnés, délivrant le signal à porteuses multiples fenêtré *s*$_{WCP-GFDM}$[*k*].

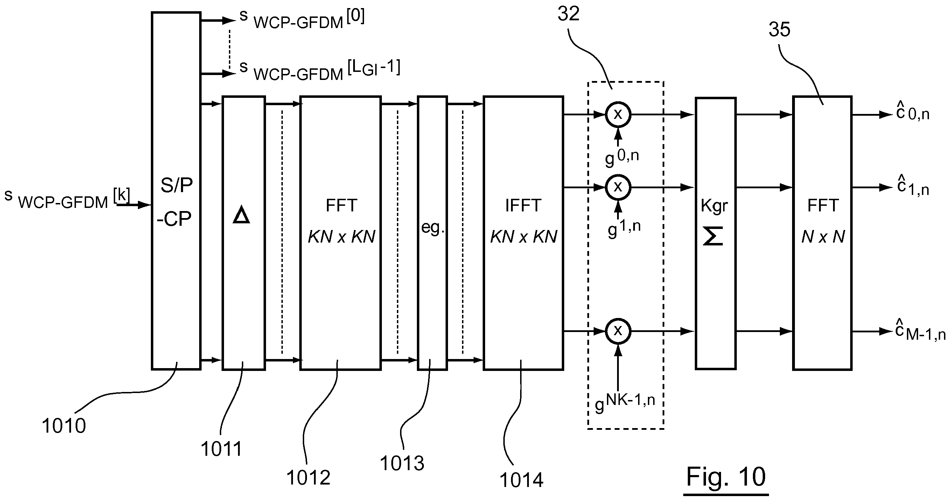

On note que le bloc de conversion série/parallèle 90 de la figure 9, de même que le bloc de conversion parallèle/série de la figure 4, sont facultatifs si les étapes d'insertion d'un préfixe cyclique 91 et de fenêtrage 92 sont directement mises en oeuvre sur les *NK* échantillons temporels.
Le signal à porteuses multiples fenêtré *S*$_{WCP-GFDM}$[*k*] ainsi obtenu présente de bonnes propriétés en termes de densité spectrale de puissance et d'orthogonalité.
Un des avantages d'une telle technique de transmission mettant un oeuvre l'insertion d'un préfixe cyclique et un fenêtrage est que le récepteur recevant le signal à porteuses multiples fenêtré *S*$_{WCP-GFDM}$[*k*] peut avoir un schéma d'égalisation hybride. Une telle flexibilité permet notamment au récepteur de décider comment décoder la partie données/informations utiles en fonction des caractéristiques de dispersion du canal de transmission.
On présente ainsi deux modes de réception, selon la position de l'étape d'égalisation dans la chaîne de réception.
Selon un premier mode de réception, illustré en figure 10, préalablement à l'étape d'estimation, le procédé met en oeuvre les étapes suivantes :

- suppression 1010, dans le signal à porteuses multiples *s*$_{WCP-GFDM}$[*k*], de la première portion de longueur *L*$_{GI}$ du préfixe cyclique ;
- décalage cyclique 1011 (Δ) du signal à porteuses multiples obtenu à l'issue de l'étape de suppression, tel que *s[k]* = *s*[mod(*k* + *L*$_{GI}$, *KN*)], pour *k* = 0, ··· *KN* - 1, délivrant *NK* échantillons temporels ;
- transformation 1012 des *NK* échantillons temporels du domaine temporel vers le domaine fréquentiel, en utilisant par exemple une FFT de taille *KN*×*KN,* délivrant *NK* échantillons fréquentiels ;
- égalisation 1013 des *NK* échantillons fréquentiels, délivrant *NK* échantillons égalisés ;
- transformation 1014 des *NK* échantillons égalisés du domaine fréquentiel vers le domaine temporel.

Les *NK* échantillons temporels obtenus à l'issue de l'étape de transformation 1014 sont ensuite traités comme décrit en relation avec les figures 5A ou 5B (ou éventuellement la figure 1), en leur appliquant :

- un filtrage 32 délivrant *NK* échantillons filtrés,
- une répartition par groupe 33/sommation 34 délivrant N symboles filtrés,
- une transformation 35 délivrant *M* symboles complexes estimés notés $\hat{c}_{m,n}$.

Dans ce premier mode de réception, l'égalisation est mise en oeuvre dans le domaine fréquentiel, et met par exemple en oeuvre un algorithme de type forçage à zéro.

Selon un deuxième mode de réception, illustré en figure 11, préalablement à l'étape d'estimation, le procédé met en oeuvre les étapes suivantes :

- suppression 1110, dans le signal à porteuses multiples, de la première portion de longueur $L_{GI}$ du préfixe cyclique ;
- décalage cyclique 1111 ($\Delta$) du signal à porteuses multiples obtenu à l'issue de l'étape de suppression, tel que $s[k]$ = s[mod($k + L_{GI}$, $KN$)], pour $k = 0, \cdots KN - 1$, délivrant *NK* échantillons temporels.

Les *NK* échantillons temporels obtenus à l'issue de l'étape de décalage cyclique 1111 sont ensuite traités comme décrit en relation avec les figures 5A ou 5B (ou éventuellement la figure 1), puis égalisés. Ainsi, les *NK* échantillons temporels obtenus à l'issue de l'étape de décalage cyclique 1111 sont traités en leur appliquant :

- un filtrage 32 délivrant *NK* échantillons filtrés,
- une répartition par groupe 33/sommation 34 délivrant N symboles filtrés,
- une transformation 35 délivrant M symboles transformés
- une égalisation 1112 des M symboles transformés délivrant M symboles complexes estimés notés $\hat{c}_{m,n}$.

Dans ce deuxième mode de réception, l'égalisation est mise en oeuvre dans le domaine fréquentiel, et met par exemple en oeuvre un algorithme de type forçage à zéro.

*5.5 Structures des dispositifs de transmission et de réception*

On présente finalement, en relation avec les figures 7 et 8 respectivement, la structure simplifiée d'un dispositif de transmission mettant notamment en oeuvre une modulation de type GFDM et la structure d'un dispositif de réception mettant notamment en oeuvre une démodulation de type GFDM selon un mode de réalisation particulier de l'invention.

Comme illustré en figure 7, un tel dispositif de transmission comprend une mémoire 71 comprenant une mémoire tampon, une unité de traitement 72, équipée par exemple d'un microprocesseur $\mu$P, et pilotée par le programme d'ordinateur 73, mettant en oeuvre le procédé de transmission selon un mode de réalisation de l'invention.

A l'initialisation, les instructions de code du programme d'ordinateur 73 sont par exemple chargées dans une mémoire RAM avant d'être exécutées par le processeur de l'unité de traitement 72. L'unité de traitement 72 reçoit en entrée au moins un bloc de symboles de données, réels ou complexes, notés $\{c_m[n]\}_{M \times K}$. Le microprocesseur de l'unité de traitement 72 met en oeuvre les étapes du procédé de transmission décrit précédemment, selon les instructions du programme d'ordinateur 73, pour générer un signal à porteuses multiples $s[k]$. Pour cela, le dispositif de transmission comprend, outre la mémoire tampon 71, un module de mise en forme du ou des blocs de symboles de données complexe comprenant les modules suivants :

- un module de transformation des M symboles de données d'une colonne du bloc du domaine fréquentiel vers le domaine temporel, délivrant *N* symboles transformés, avec $N \ge M$ ;
- un module de répétition cyclique des *N* symboles transformés, délivrant *NK* symboles répétés ;
- un module de filtrage par un filtre de mise en forme des *NK* symboles répétés, délivrant *NK* symboles filtrés ; et

et un module de sommation des symboles filtrés obtenus pour les différentes colonnes du bloc, délivrant *NK* échantillons temporels formant le signal à porteuses multiples.

Ces modules sont pilotés par le microprocesseur de l'unité de traitement 72.

Comme illustré en figure 8, un tel dispositif de réception a quant à lui une mémoire 81 comprenant une mémoire tampon, une unité de traitement 82, équipée par exemple d'un microprocesseur $\mu$P, et pilotée par le programme d'ordinateur 83, mettant en oeuvre le procédé de réception selon un mode de réalisation de l'invention.

A l'initialisation, les instructions de code du programme d'ordinateur 83 sont par exemple chargées dans une mémoire RAM avant d'être exécutées par le processeur de l'unité de traitement 82. L'unité de traitement 82 reçoit en entrée un signal à porteuses multiples $s[k]$. Le microprocesseur de l'unité de traitement 82 met en oeuvre les étapes du procédé de réception décrit précédemment, selon les instructions du programme d'ordinateur 83, pour estimer les symboles de données transmis. Pour cela, le dispositif de réception comprend, outre la mémoire tampon 81, un module d'estimation d'au moins un symbole de données complexe du bloc, comprenant :

- un module d'obtention d'un signal à porteuses multiples comprenant $NK$ échantillons, avec $N \geq M$ ;
- un module de filtrage par un filtre de mise en forme des $NK$ échantillons, délivrant $NK$ échantillons filtrés ;
- un module de répartition des $NK$ échantillons filtrés en $K$ groupes de $N$ échantillons filtrés ;
- un module de sommation des échantillons filtrés des $K$ groupes, délivrant $N$ symboles filtrés ;
- un module de transformation des $N$ symboles filtrés du domaine temporel vers le domaine fréquentiel, délivrant $M$ symboles de données estimés.

Ces modules sont pilotés par le microprocesseur de l'unité de traitement 82.

**Revendications**

1. Procédé de transmission de symboles de données complexes destiné à être mis en oeuvre dans un système de télécommunications, délivrant un signal à porteuses multiples,
   **caractérisé en ce qu'**il comprend une étape de mise en forme d'au moins un bloc de $M \times K$ symboles de données complexes, avec $M > 1$ et $K > 1$, mettant en oeuvre les étapes suivantes :

   - pour au moins une colonne dudit bloc :

     - transformation (21) des $M$ symboles de données complexes de ladite colonne du domaine fréquentiel vers le domaine temporel, délivrant $N$ symboles transformés, avec $N \geq M$ ;
     - répétition cyclique (22) desdits $N$ symboles transformés, délivrant $NK$ symboles répétés ;
     - filtrage (23) par un filtre de mise en forme desdits $NK$ symboles répétés, délivrant $NK$ symboles filtrés ; et

     - sommation (24) desdits symboles filtrés obtenus pour les différentes colonnes dudit bloc, délivrant $NK$ échantillons temporels formant ledit signal à porteuses multiples.

2. Procédé de transmission selon la revendication 1, **caractérisé en ce que** ladite étape de transformation (21) met en oeuvre une transformée de Fourier rapide inverse de taille $N \times N$ appliquée aux M symboles de données si $N = M$, et appliquée aux $M$ symboles de données complétés par $(N - M)$ symboles nuls si $N > M$.

3. Procédé de transmission selon l'une quelconque des revendications 1 et 2, **caractérisé en ce que** ladite étape de mise en forme d'au moins un bloc de $MxK$ symboles de données délivre un signal à porteuses multiples tel que :

$$\mathbf{s}_{NK \times 1} = diag\{\mathbf{G}_{NK \times K}(\mathbf{E}_{NK \times N}\mathbf{W}_{N \times N}\mathbf{C}_{N \times K})^T\}$$

avec : $C_{N \times K} = \{c_m[n]\}_{N \times K}$ ledit bloc de symboles de données, complété par des symboles nuls si $N > M$, pour $0 \leq n \leq K - 1$, $0 \leq m \leq M - 1$ ;

$$\mathbf{W}_{N \times N} = \left\{e^{\frac{j2\pi km}{M}}\right\}_{N \times N}$$ la matrice représentative de ladite étape de transformation du domaine fréquentiel vers le domaine temporel, pour $0 \leq k \leq N - 1$, $0 \leq m \leq N - 1$ ;

$E_{NK \times N}$ la matrice représentative de ladite étape de répétition cyclique, telle que

$$\mathbf{E}_{NK \times N}^T = [\mathbf{I}_{N \times N} \cdots \mathbf{I}_{N \times N}]_{N \times NK} \; ;$$

$\mathbf{G}_{NK \times K} = \{g^{k,n}\}_{NK \times K} = \{g[mod(k - nN, NK)]\}_{NK \times K}$ la matrice représentative de ladite étape de filtrage par le filtre de mise en forme $\tilde{g}[k]$, obtenu par répétition périodique d'un filtre prototype $g[k]$ sur une période $NK$ et tel que $\tilde{g}[k] = g[mod(k,NK)]$, pour $0 \leq k \leq NK - 1$, $0 \leq n \leq K - 1$ ;

$(.)^T$ l'opérateur de transposition matricielle ;
$diag\{.\}$ l'opérateur d'extraction des éléments diagonaux d'une matrice.

4. Procédé de transmission selon l'une quelconque des revendications 1 à 3, **caractérisé en ce que** ledit filtre de mise en forme est un filtre en racine de cosinus surélevé modifié, comprenant, dans le domaine fréquentiel, des coefficients nuls et des coefficients non nuls, et dont le support L des coefficients non nuls est tel que :

$$L = 2\left\lceil\frac{K(1+\alpha)}{2}\right\rceil - 1,$$ avec $\lceil \cdot \rceil$ l'opérateur partie entière par excès et $\alpha$ le facteur de retombée dudit filtre de mise en forme.

5. Procédé de transmission selon la revendication 4, **caractérisé en ce que** ledit filtre de mise en forme est un filtre en racine de cosinus surélevé modifié tel que : $L = 2 \left\lceil \frac{K}{2} \right\rceil - 1.$

6. Procédé de transmission selon l'une quelconque des revendications 1 à 5, **caractérisé en ce qu'**il comprend une étape d'insertion (91) d'un préfixe cyclique devant au moins un échantillon temporel formant ledit signal à porteuses multiples,
ledit préfixe cyclique, de longueur $L_{CP} = L_{GI} + L_{RI}$, comprenant une première portion de longueur $L_{GI}$ utilisée pour absorber l'interférence due au canal de transmission et une deuxième portion de longueur $L_{RI}$ utilisée pour améliorer le spectre de puissance dudit signal à porteuses multiples,
et une étape de fenêtrage (92) dudit signal à porteuses multiples mettant en oeuvre les étapes suivantes :

   - multiplication (921) de chacun desdits échantillons temporels formant ledit signal à porteuses multiples et dudit préfixe cyclique par un coefficient de fenêtrage, délivrant $KN + L_{CP}$ échantillons fenêtrés ;
   - suréchantillonnage (922) par un facteur de suréchantillonnage $Q = KN + L_{GI}$ desdits échantillons fenêtrés, délivrant $KN + L_{CP}$ échantillons suréchantillonnés ;
   - décalage et sommation (923) desdits échantillons suréchantillonnés, délivrant un signal à porteuses multiples fenêtré.

7. Procédé de transmission selon la revendication 6, caractérisé en que ledit signal à porteuses multiples fenêtré $s_{WCP\text{-}GFDM}[k]$ est tel que :

$$s_{WCP-GFDM}[k] = \sum_{r=l-1}^{l+1} s[mod(k - L_{CP}, KN)]h[k - r(KN + L_{GI})]$$

   avec : $s[k]$ ledit signal à porteuses multiples avant insertion du préfixe cyclique ;
   $l$ l'indice du bloc considéré ;
   $h[k]$ une fonction fenêtre ;
   r un entier pris dans l'intervalle $[l - 1, l + 1]$.

8. Dispositif de transmission de symboles de données complexes destiné à être mis en oeuvre dans un système de télécommunications, délivrant un signal à porteuses multiples, **caractérisé en ce qu'**il comprend un module de mise en forme d'au moins un bloc de $MxK$ symboles de données complexes, avec $M > 1$ et $K > 1$, comprenant les modules suivants, activés pour au moins une colonne dudit bloc :

   - un module de transformation des $M$ symboles de données complexes de ladite colonne du domaine fréquentiel vers le domaine temporel, délivrant $N$ symboles transformés, avec $N \geq M$ ;
   - un module de répétition cyclique desdits $N$ symboles transformés, délivrant $NK$ symboles répétés ;
   - un module de filtrage par un filtre de mise en forme desdits $NK$ symboles répétés, délivrant $NK$ symboles filtrés ;

   et un module de sommation desdits symboles filtrés obtenus pour les différentes colonnes dudit bloc, délivrant $NK$ échantillons temporels formant ledit signal à porteuses multiples.

9. Procédé de réception d'un signal à porteuses multiples destiné à être mis en oeuvre dans un système de télécommunications, délivrant des symboles de données complexes estimés,
ledit signal à porteuses multiples étant obtenu en mettant en forme, en émission, au moins un bloc de $MxK$ symboles de données complexes, avec $M > 1$ et $K > 1$,
**caractérisé en ce que** ledit procédé de réception comprend une étape d'estimation d'au moins un symbole de données complexe dudit bloc, mettant en oeuvre les étapes suivantes :

   - obtention (31) d'un signal à porteuses multiples comprenant $NK$ échantillons, avec $N \geq M$;
   - filtrage (32) par un filtre de mise en forme desdits $NK$ échantillons, délivrant $NK$ échantillons filtrés ;
   - répartition (33) desdits $NK$ échantillons filtrés en $K$ groupes de $N$ échantillons filtrés ;

- sommation (34) desdits échantillons filtrés des $K$ groupes, délivrant $N$ symboles filtrés ;
- transformation (35) des $N$ symboles filtrés du domaine temporel vers le domaine fréquentiel, délivrant $M$ symboles de données complexes estimés.

**10.** Procédé de réception selon la revendication 9, **caractérisé en ce que** ladite étape de transformation (35) met en oeuvre une transformée de Fourier rapide de taille $N \times N$ et, si $N > M$, une extraction des $M$ premiers symboles filtrés transformés, délivrant lesdits $M$ symboles de données complexes estimés.

**11.** Procédé de réception selon l'une quelconque des revendications 9 et 10, **caractérisé en ce que** ladite étape d'estimation d'au moins un symbole de données complexe dudit bloc délivre un symbole de données estimé, à la position $(m_0, n_0)$, tel que :

$$y_{m_0,n_0} = \sum_{k=0}^{M-1} \sum_{l=0}^{K-1} s[k + lM]\tilde{g}[k + lM - n_0 N]e^{\frac{-j2\pi m_0(k-n_0 N)}{M}}$$

avec : $s[k]$ ledit signal à porteuses multiples ;
$\tilde{g}[k]$ ledit filtre de mise en forme.

**12.** Procédé de réception selon l'une quelconque des revendications 9 à 11, **caractérisé en ce que** ladite étape d'estimation d'au moins un symbole de données complexe dudit bloc délivre un symbole de données estimé, à la position $(m_0, n_0)$, tel que :

$$\mathbf{y}_{N\times 1} = \mathbf{W}_{N\times N}^{H} \mathbf{E}_{NK\times N}^{T} \mathbf{D}_{NK\times NK} \mathbf{s}_{NK\times 1}$$

avec : $\mathbf{W}_{N\times N}^{H}$ la matrice représentative de ladite étape de transformation du domaine temporel vers le domaine fréquentiel ;

$\mathbf{E}_{NK\times N}^{T} = [\mathbf{I}_{N\times N} \cdots \mathbf{I}_{N\times N}]_{N\times NK}$ la matrice représentative desdites étapes de répartition et sommation ;
$\mathbf{D}_{NK\times NK} = diag(g^{k,n})$ la matrice représentative de ladite étape de filtrage par le filtre de mise en forme $\tilde{g}[k]$, obtenu par répétition périodique d'un filtre prototype $g[k]$ sur une période $NK$ et tel que $\tilde{g}[k] = g[\text{mod}(k, NK)]$, avec $g^{k,n}$ les coefficients dudit filtre de mise en forme, $diag\{.\}$ l'opérateur d'extraction des éléments diagonaux d'une matrice, $0 \leq n \leq K - 1$, et $0 \leq k \leq NK - 1$ ;
$\mathbf{s}_{NK\times 1}$ un vecteur représentatif desdits $NK$ échantillons dudit signal à porteuses multiples ;
$(.)^T$ l'opérateur de transposition matricielle ;
$(.)^H$ l'opérateur de transposition et conjugaison matricielle.

**13.** Dispositif de réception d'un signal à porteuses multiples destiné à être mis en oeuvre dans un système de télécommunications, délivrant des symboles de données complexes estimés,
ledit signal à porteuses multiples étant obtenu en mettant en forme, en émission, au moins un bloc de $MxK$ symboles de données complexes, avec $M > 1$ et $K > 1$,
**caractérisé en ce que** ledit dispositif de réception comprend un module d'estimation d'au moins un symbole de données complexe dudit bloc, comprenant :

- un module d'obtention d'un signal à porteuses multiples comprenant $NK$ échantillons, avec $N \geq M$ ;
- un module de filtrage par un filtre de mise en forme desdits $NK$ échantillons, délivrant $NK$ échantillons filtrés ;
- un module de répartition desdits $NK$ échantillons filtrés en $K$ groupes de $N$ échantillons filtrés ;
- un module de sommation desdits échantillons filtrés des $K$ groupes, délivrant $N$ symboles filtrés ;
- un module de transformation des $N$ symboles filtrés du domaine temporel vers le domaine fréquentiel, délivrant $M$ symboles de données complexes estimés.

**14.** Programme d'ordinateur comportant des instructions pour la mise en oeuvre d'un procédé selon la revendication 1 ou selon la revendication 9 lorsque ce programme est exécuté par un processeur.

**Patentansprüche**

1. Verfahren zur Übertragung komplexer Datensymbole, dazu bestimmt, in einem Telekommunikationssystem durchgeführt zu werden, das ein Mehrträger-Signal liefert,
   **dadurch gekennzeichnet, dass** es einen Schritt der Aufbereitung mindestens eines Blocks von M x K komplexen Datensymbolen enthält, mit M > 1 und K > 1, der die folgenden Schritte durchführt:

   - für mindestens eine Spalte des Blocks:

      - Transformation (21) der M komplexen Datensymbole der Spalte vom Frequenzbereich zum Zeitbereich, die N transformierte Symbole liefert, mit N ≥ M;
      - zyklische Wiederholung (22) der N transformierten Symbole, die NK wiederholte Symbole liefert;
      - Filterung (23) durch ein Aufbereitungsfilter der NK wiederholten Symbole, die NK gefilterte Symbole liefert; und

      - Summierung (24) der für die verschiedenen Spalten des Blocks erhaltenen gefilterten Symbole, die NK zeitliche Tastproben liefert, die das Mehrträger-Signal formen.

2. Übertragungsverfahren nach Anspruch I, **dadurch gekennzeichnet, dass** der Transformationsschritt (21) eine inverse schnelle Fourier-Transformation der Größe N x N durchführt, angewendet an die M Datensymbole, wenn gilt N = M, und angewendet an die durch (N - M) Symbole Null vervollständigten M Datensymbole, wenn gilt N > M.

3. Übertragungsverfahren nach einem der Ansprüche 1 und 2, **dadurch gekennzeichnet, dass** der Aufbereitungsschritt mindestens eines Blocks von M x K Datensymbolen ein Mehrträger-Signal liefert, derart, dass gilt:

$$S_{NKx1} = \mathrm{diag}\{G_{NKxK}(E_{NKxN}W_{NxN}C_{NxK})^{\mathrm{T}}\}$$

mit:

$C_{NxK} = \{c_m[n]\}_{NxK}$ dem Block von Datensymbolen, vervollständigt durch Symbole Null, wenn gilt N > M, für $0 \leq n \leq K-1$, $0 \leq m \leq M-1$;

$$W_{N\times N} = \left\{e^{\frac{j2\pi km}{M}}\right\}_{N\times N}$$ der für den Transformationsschritt vom Frequenzbereich zum Zeitbereich repräsentativen Matrix, für $0 \leq k \leq N-1$, $0 \leq m \leq N-1$;

$E_{NKxN}$ der für den zyklischen Wiederholungsschritt repräsentativen Matrix, derart, dass gilt $E_{NK\times N}^{T} = [I_{N\times N} \ \cdots \ I_{N\times N}]_{N\times NK}$;

$G_{NKxK} = \{g^{k,n}\}_{NKxK} = \{g[\mathrm{mod}(k-nN,NK)]\}$ der für den Schritt der Filterung durch das Aufbereitungsfilter $\tilde{g}[k]$ repräsentativen Matrix, erhalten durch periodische Wiederholung eines Prototyp-Filters g[k] über eine Periode NK und derart, dass gilt $\tilde{g}[k] = g[\mathrm{mod}(k,NK)]$, für $0 \leq k \leq NK-1$, $0 \leq n \leq K-1$;
$(.)^{\mathrm{T}}$ dem Matrix-Transpositionsoperator;
diag{.} dem Extraktionsoperator der diagonalen Elemente einer Matrix.

4. Übertragungsverfahren nach einem der Ansprüche 1 bis 3, **dadurch gekennzeichnet, dass** das Aufbereitungsfilter ein modifiziertes Root-Raised-Cosine-Filter ist, das im Frequenzbereich Koeffizienten gleich Null und Koeffizienten ungleich Null enthält, und dessen Träger L der Koeffizienten ungleich Null derart ist, dass gilt:

$$L = 2\left\lceil \frac{K(1+\alpha)}{2} \right\rceil - 1,$$ mit ⌈.⌉ dem aufgerundeten vollwertigen Operator und α dem Abfallfaktor des Aufbereitungsfilters.

5. Übertragungsverfahren nach Anspruch 4, **dadurch gekennzeichnet, dass** das Aufbereitungsfilter ein modifiziertes Root-Raised-Cosine-Filter ist, derart, dass gilt: $$L = 2\left\lceil \frac{K}{2} \right\rceil - 1.$$

6. Übertragungsverfahren nach einem der Ansprüche 1 bis 5, **dadurch gekennzeichnet, dass** es einen Schritt der Einfügung (91) eines zyklischen Präfix vor mindestens einer das Mehrträger-Signal formenden zeitlichen Tastprobe enthält,

wobei das zyklische Präfix, einer Länge $L_{CP} = L_{G1} + L_{R1}$, einen ersten Abschnitt einer Länge $L_{G1}$, der verwendet wird, um die Interferenz aufgrund des Übertragungskanals zu absorbieren, und einen zweiten Abschnitt einer Länge $L_{R1}$ enthält, der verwendet wird, um das Leistungsspektrum des Mehrträger-Signals zu verbessern,

und einen Schritt der Fensterung (92) des Mehrträger-Signals enthält, der die folgenden Schritte durchführt:

- Multiplikation (921) jeder der das Mehrträger-Signal formenden zeitlichen Tastproben und des zyklischen Präfix mit einem Fensterungskoeffizient, die $KN + L_{CP}$ gefensterte Tastproben liefert;
- Überabtastung (922) mit einem Überabtastungsfaktor $Q = KN + L_{G1}$ der gefensterten Tastproben, die $KN + L_{CP}$ überabgetastete Tastproben liefert;
- Verschiebung und Summierung (923) der ein gefenstertes Mehrträger-Signal liefernden überabgetasteten Tastproben.

7. Übertragungsverfahren nach Anspruch 6, **dadurch gekennzeichnet, dass** das gefensterte Mehrträger-Signal $S_{WCP\text{-}GFDM}[k]$ derart ist, dass gilt:

$$S_{WCP-GFDM}[k] = \sum_{r=l-1}^{l+1} s[mod(k - L_{CP}, KN)]h[k - r(KN + L_{G1})]$$

mit:

$s[k]$ dem Mehrträger-Signal vor der Einfügung des zyklischen Präfix;
$l$ dem Index des betrachteten Blocks;
h[k] einer Fensterfunktion;
r einer aus dem Intervall [$l$ - 1, $l$ + 1] entnommenen ganze Zahl.

8. Vorrichtung zur Übertragung komplexer Datensymbole, dazu bestimmt, in einem Telekommunikationssystem angewendet zu werden, die ein Mehrträger-Signal liefert, **dadurch gekennzeichnet, dass** sie ein Aufbereitungsmodul mindestens eines Blocks von M x K komplexen Datensymbolen enthält, mit M > 1 und K > 1, das die folgenden Module enthält, die für mindestens eine Spalte des Blocks aktiviert werden:

- ein Modul zur Transformation der M komplexen Datensymbole der Spalte vom Frequenzbereich zum Zeitbereich, die N transformierte Symboles liefert, mit $N \geq M$;
- ein Modul zur zyklischen Wiederholung der N transformierten Symbole, die NK wiederholte Symbole liefert;
- ein Modul zur Filterung durch ein Aufbereitungsfilter der NK wiederholten Symbole, die NK gefilterte Symbole liefert;

und ein Modul zur Summierung der für die verschiedenen Spalten des Blocks erhaltenen gefilterten Symbole, die NK zeitliche Tastproben liefert, die das Mehrträger-Signal formen.

9. Verfahren zum Empfang eines Mehrträger-Signals, dazu bestimmt, in einem Telekommunikationssystem durchgeführt zu werden, das geschätzte komplexe Datensymbole liefert,

wobei das Mehrträger-Signal erhalten wird, indem auf der Sendeseite mindestens ein Block von M x K komplexen Datensymbolen aufbereitet wird, mit M > 1 und K > 1,

**dadurch gekennzeichnet, dass** das Empfangsverfahren einen Schritt der Schätzung mindestens eines komplexen Datensymbols des Blocks enthält, unter Durchführung der folgenden Schritte:

- Erhalt (31) eines NK Tastproben enthaltenden Mehrträger-Signals, mit $N \geq M$;
- Filterung (32) der NK Tastproben durch ein Aufbereitungsfilter, die NK gefilterte Tastproben liefert;
- Aufteilung (33) der NK gefilterten Tastproben in K Gruppen von N gefilterten Tastproben;
- Summierung (34) der gefilterten Tastproben der K Gruppen, die N gefilterte Symbole liefert;
- Transformation (35) der N gefilterten Symbole vom Zeitbereich zum Frequenzbereich, die M geschätzte komplexe Datensymbole liefert.

10. Empfangsverfahren nach Anspruch 9, **dadurch gekennzeichnet, dass** der Transformationsschritt (35) eine schnelle Fourier-Transformation der Größe N x N und, wenn N > M, eine Extraktion der M ersten transformierten gefilterten Symbole anwendet, die die M geschätzten komplexen Datensymbole liefern.

11. Empfangsverfahren nach einem der Ansprüche 9 und 10, **dadurch gekennzeichnet, dass** der Schätzschritt mindestens eines komplexen Datensymbols des Blocks ein geschätztes Datensymbol an der Stelle $(m_0, n_0)$ liefert, derart, dass gilt:

$$y_{m_0,n_0} = \sum_{k=0}^{M-1} \sum_{l=0}^{K-1} s[k + lM]\tilde{g}[k + lM - n_0N]e^{\frac{-j2\pi m_0(k - n_0N)}{M}}$$

mit:

s[k] dem Mehrträger-Signal;
$\tilde{g}[k]$ dem Aufbereitungsfilter.

12. Empfangsverfahren nach einem der Ansprüche 9 bis 11, **dadurch gekennzeichnet, dass** der Schätzschritt mindestens eines komplexen Datensymbols des Blocks ein geschätztes Datensymbol an der Stelle $(m_0, n_0)$ liefert, derart, dass gilt:

$$y_{N\times 1} = W_{N\times N}^H E_{NK\times N}^T D_{NK\times NK} s_{NK\times 1}$$

mit:

$W_{N\times N}^H$ der für den Transformationsschritt vom Zeitbereich zum Frequenzbereich repräsentativen Matrix;

$E_{NK\times N}^T = [I_{N\times N} \quad I_{N\times N}]_{N\times NK}$ der für die Schritte der Aufteilung und Summierung repräsentativen Matrix;
$D_{NKxNK}$ = diag $(g^{k,n})$ der für den Schritt der Filterung durch das Aufbereitungsfilter $\tilde{g}[k]$ repräsentativen Matrix, erhalten durch periodische Wiederholung eines Prototyp-Filters g[k] über eine Periode NK und derart, dass gilt $\tilde{g}[k]$ = g[mod(k,NK)], mit $g^{k,n}$ den Koeffizienten des Aufbereitungsfilters, diag{.} dem Extraktionsoperator der diagonalen Elemente einer Matrix, $0 \leq n \leq K-1$, und $0 \leq k \leq NK-1$;
$S_{NKx1}$ einem für die NK Tastproben des Mehrträger-Signals repräsentativen Vektor;
$(.)^T$ dem Matrixtranspositions-Operator;
$(.)^H$ dem Matrix-Transpositions- und -Konjugations-Operator.

13. Empfangsvorrichtung eines Mehrträger-Signals, dazu bestimmt, in einem Telekommunikationssystem angewendet zu werden, die geschätzte komplexe Datensymbole liefert,
wobei das Mehrträger-Signal erhalten wird, indem auf der Sendeseite mindestens ein Block von M x K komplexen Datensymbolen aufbereitet wird, mit M > 1 und K > 1,
**dadurch gekennzeichnet, dass** die Empfangsvorrichtung ein Schätzmodul mindestens eines komplexen Datensymbols des Blocks enthält,
das enthält:

- ein Modul zum Erhalt eines NK Tastproben enthaltenden Mehrträger-Signals, mit N ≥ M;
- ein Modul zur Filterung der NK Tastproben durch ein Aufbereitungsfilter, das NK gefilterte Tastproben liefert;
- ein Modul zur Aufteilung der NK gefilterten Tastproben in K Gruppen von N gefilterten Tastproben;
- ein Modul zur Summierung der gefilterten Tastproben der K Gruppen, das N gefilterte Symbole liefert;
- ein Modul zur Transformation der N gefilterten Symbole vom Zeitbereich zum Frequenzbereich, das M geschätzte komplexe Datensymbole liefert.

14. Computerprogramm, das Anweisungen zur Durchführung eines Verfahrens nach Anspruch 1 oder nach Anspruch 9 aufweist, wenn dieses Programm von einem Prozessor ausgeführt wird.

**Claims**

1. Method for transmitting complex data symbols intended to be implemented in a telecommunication system, delivering a multiple-carrier signal, **characterized in that** it comprises a step of forming at least one block of $M \times K$ complex data symbols, with $M > 1$ and $K > 1$, implementing the following steps:

    - for at least one column of said block:

        - transformation (21) of the $M$ complex data symbols of said column from the frequency domain to the time domain, delivering N transformed symbols, with $N \geq M$;
        - cyclical repetition (22) of said $N$ transformed symbols, delivering $NK$ repeated symbols;
        - filtering (23) by a forming filter of said $NK$ repeated symbols, delivering $NK$ filtered symbols; and

    - summation (24) of said filtered symbols obtained for the different columns of said block, delivering $NK$ temporal samples forming said multiple-carrier signal.

2. Transmission method according to Claim 1, **characterized in that** said transformation step (21) implements an inverse fast Fourier transform of $N \times N$ size applied to the $M$ data symbols if $N = M$, and applied to the $M$ data symbols complemented by $(N - M)$ null symbols if $N > M$.

3. Transmission method according to either one of Claims 1 and 2, **characterized in that** said step of forming at least one block of $M \times K$ data symbols delivers a multiple-carrier signal such that:

$$\mathbf{s}_{NK \times 1} = diag\{\mathbf{G}_{NK \times K}(\mathbf{E}_{NK \times N}\mathbf{W}_{N \times N}\mathbf{C}_{N \times K})^T\}$$

with: $\mathbf{C}_{N \times K} = \{c_m[n]\}_{N \times K}$ said block of data symbols, complemented by null symbols if $N > M$, for $0 \leq n \leq K - 1$, $0 \leq m \leq M - 1$;

$\mathbf{W}_{N \times N} = \left\{ e^{\frac{j2\pi km}{M}} \right\}_{N \times N}$ the matrix representative of said step of transformation from the frequency domain to the time domain, for $0 \leq k \leq N - 1$, $0 \leq m \leq N - 1$;

$E_{NK \times N}$ the matrix representative of said cyclical repetition step, such that $\mathbf{E}_{NK \times N}^{T} = [\mathbf{I}_{N \times N} \cdots \mathbf{I}_{N \times N}]_{N \times NK}$ ;

$\mathbf{G}_{NK \times K} = \{g^{k,n}\}_{NK \times K} = \{g[\text{mod}(k - nN, NK)]\}_{NK \times K}$ the matrix representative of said step of filtering by the forming filter $\tilde{g}[k]$, obtained by periodic repetition of a prototype filter $g[k]$ over a period $NK$ and such that $\tilde{g}[k] = g[\text{mod}(k,NK)]$, for $0 \leq k \leq NK - 1$, $0 \leq n \leq K - 1$;

$(.)^T$ the matrix transposition operator;

$diag\{.\}$ the extraction operator for the diagonal elements of a matrix.

4. Transmission method according to any one of Claims 1 to 3, **characterized in that** said forming filter is a modified root raised cosine filter, comprising, in the frequency domain, null coefficients and non-null coefficients, and in which the support L of the non-null coefficients is such that: $L = 2\left\lceil \frac{K(1+\alpha)}{2} \right\rceil - 1$ , with $\lceil . \rceil$ the excess integer part operator and $\alpha$ the drop back factor of said forming filter.

5. Transmission method according to Claim 4, **characterized in that** said forming filter is a modified raised root cosine filter such that: $L = 2\left\lceil \frac{K}{2} \right\rceil - 1$ .

6. Transmission method according to any one of Claims 1 to 5, **characterized in that** it comprises a step of insertion (91) of a cyclical prefix in front of at least one temporal sample forming said multiple-carrier signal, said cyclical prefix, of length $L_{CP} = L_{GI} + L_{RI}$, comprising a first portion of length $L_{GI}$ used to absorb the interference due to the transmission channel and a second portion of length $L_{RI}$ used to improve the power spectrum of said multiple-carrier signal, and a step of windowing (92) of said multiple-carrier signal implementing the following steps:

- multiplication (921) of each of said temporal samples forming said multiple-carrier signal and of said cyclical prefix by a windowing coefficient, delivering $KN + L_{CP}$ windowed samples;
- oversampling (922) by an oversampling factor $Q = KN + L_{GI}$ of said windowed samples, delivering $KN + L_{CP}$ oversampled samples;
- shifting and summation (923) of said oversampled samples, delivering a windowed multiple-carrier signal.

7. Transmission method according to Claim 6, **characterized in that** said windowed multiple-carrier signal $S_{WCP\text{-}GFDM}[k]$ is such that:

$$s_{WCP-GFDM}[k] = \sum_{r=l-1}^{l+1} s[mod(k - L_{CP}, KN)]h[k - r(KN + L_{GI})]$$

with: $s[k]$ said multiple-carrier signal before insertion of the cyclical prefix;
$l$ the index of the block concerned;
$h[k]$ a window function;
$r$ an integer taken from the range $[l - 1, l + 1]$.

8. Device for transmitting complex data symbols intended to be implemented in a telecommunication system, delivering a multiple-carrier signal, **characterized in that** it comprises a module for forming at least one block of $M \times K$ complex data symbols, with $M > 1$ and $K > 1$, comprising the following modules, activated for at least one column of said block:

- a module for transforming the $M$ complex data symbols of said column from the frequency domain to the time domain, delivering $N$ transformed symbols, with $N \geq M$;
- a module for cyclically repeating said $N$ transformed symbols, delivering $NK$ repeated symbols;
- a module for filtering, by a forming filter, said $NK$ repeated symbols, delivering $NK$ filtered symbols; and

a module for summing said filtered symbols obtained for the different columns of said block, delivering $NK$ temporal samples forming said multiple-carrier signal.

9. Method for receiving a multiple-carrier signal intended to be implemented in a telecommunication system, delivering estimated complex data symbols, said multiple-carrier signal being obtained by forming, in transmission, at least one block of $M \times K$ complex data symbols, with $M > 1$ and $K > 1$, **characterized in that** said reception method comprises a step of estimation of at least one complex data symbol of said block, implementing the following steps:

- obtaining (31) of a multiple-carrier signal comprising $NK$ samples, with $N \geq M$;
- filtering (32) by a forming filter of said $NK$ samples, delivering $NK$ filtered samples;
- distribution (33) of said $NK$ filtered samples in K groups of N filtered samples;
- summation (34) of said filtered samples of the $K$ groups, delivering $N$ filtered symbols;
- transformation (35) of the $N$ filtered symbols from the time domain to the frequency domain, delivering $M$ estimated complex data symbols.

10. Reception method according to Claim 9, **characterized in that** said transformation step (35) implements a fast Fourier transform of size $N \times N$ and, if $N > M$, an extraction of the first $M$ transformed filtered symbols, delivering said $M$ estimated complex data symbols.

11. Reception method according to either one of Claims 9 and 10, **characterized in that** said step of estimation of at least one complex data symbol of said block delivers an estimated data symbol, at the position $(m_0, n_0)$, such that:

$$y_{m_0,n_0} = \sum_{k=0}^{M-1} \sum_{l=0}^{K-1} s[k + lM]\bar{g}[k + lM - n_0 N]e^{\frac{-j2\pi m_0(k - n_0 N)}{M}}$$

with: $s[k]$ said multiple-carrier signal;
$\bar{g}[k]$, said forming filter.

12. Reception method according to any one of Claims 9 to 11, **characterized in that** said step of estimation of at least one complex data symbol of said block delivers an estimated data symbol, at the position $(m_0, n_0)$, such that:

$$\mathbf{y}_{N \times 1} = \mathbf{W}_{N \times N}^{H} \mathbf{E}_{NK \times N}^{T} \mathbf{D}_{NK \times NK} \mathbf{s}_{NK \times 1}$$

with: $\mathbf{W}_{N \times N}^{H}$ the matrix representative of said step of transformation from the time domain to the frequency domain;

$\mathbf{E}_{NK \times N}^{T} = [\mathbf{I}_{N \times N} \cdots \mathbf{I}_{N \times N}]_{N \times NK}$ the matrix representative of said distribution and summation steps;

$\mathbf{D}_{NK \times NK} = \textbf{\textit{diag}}(\textbf{\textit{g}}^{k,n})$ the matrix representative of said step of filtering by the forming filter $\overline{\textbf{\textit{g}}[\textbf{\textit{k}}]}$, obtained by periodic repetition of a prototype filter $g[k]$ over a period $NK$ and such that $\overline{\textbf{\textit{g}}[\textbf{\textit{k}}]} = g[\text{mod}(k, NK)]$, with $g^{k,n}$ the coefficients of said forming filter, **diag{.}** the operator for extracting diagonal elements of a matrix, $0 \le n \le K - 1$, and $0 \le k \le NK - 1$;

$s_{NK \times 1}$ a vector representative of said $NK$ samples of said multiple-carrier signal;

$(.)^T$ the matrix transposition operator;

$(.)^H$ the matrix transposition and conjugation operator.

13. Device for receiving a multiple-carrier signal intended to be implemented in a telecommunication system, delivering estimated complex data symbols, said multiple-carrier signal being obtained by forming, in transmission, at least one block of $M \times K$ complex data symbols, with $M > 1$ and $K > 1$, **characterized in that** said reception device comprises a module for estimating at least one complex data symbol of said block, comprising:

- a module for obtaining a multiple-carrier signal comprising $NK$ samples, with $N \ge M$;
- a module for filtering, by a forming filter, said $NK$ samples, delivering $NK$ filtered samples;
- a module for distributing said $NK$ filtered samples in $K$ groups of $N$ filtered samples;
- a module for summing said filtered samples of the $K$ groups, delivering $N$ filtered symbols;
- a module for transforming the N filtered symbols from the time domain to the frequency domain, delivering $M$ estimated complex data symbols.

14. Computer program comprising instructions for implementing a method according to Claim 1 or according to Claim 9 when this program is run by a processor.

EP 3 042 480 B1

11  12  13  14  15  16

$c_0[n]$ → $\uparrow N$ →

$c_1[n]$ → $\uparrow N$ →

$c_{M-1}[n]$ → $\uparrow N$ →

Cir. Conv. $g[k]$

×  1

×  $e^{j\frac{2\pi k}{M}}$

×  $e^{j\frac{2\pi k(M-1)}{M}}$

+  $s[k]$

×  1

×  $e^{-j\frac{2\pi k}{M}}$

×  $e^{-j\frac{2\pi k(M-1)}{M}}$

Cir. Conv. $g[k]$

$\downarrow N$ → $\hat{c}_0[n]$

$\downarrow N$ → $\hat{c}_1[n]$

$\downarrow N$ → $\hat{c}_{M-1}[n]$

Fig. 1

$c_m[n]$

21 — freq. → temp.

22 — rep.

23 — filt.

24 — $\sum$

$s[k]$

Fig. 2

31 — $R_x(s[k])$

32 — filt.

33 — K group.

34 — $\sum$

35 — temp. → freq.

Fig. 3

Fig. 4

Fig. 5A

Fig. 5B

Fig. 6

Fig. 7

Fig. 8

$s[k]$

S/P

CP

$\times$

$h^{[0]}$

$\uparrow Q$

$+$

$s_{WCP\text{-}GFDM}[k]$

$z^{-1}$

$\times$

$h^{[1]}$

$\uparrow Q$

$+$

$z^{-1}$

$z^{-1}$

$\times$

$\uparrow Q$

$h^{[KN+L_{CP}-1]}$

90 91 921 922 923 92

<u>Fig. 9</u>

$s_{WCP\text{-}GFDM}[0]$

$s_{WCP\text{-}GFDM}[L_{GI}-1]$

35

$s_{WCP\text{-}GFDM}[k]$

S/P
-CP

$\Delta$

$\times$

$g^{0,n}$

$\times$

$g^{1,n}$

$K_{gr}$
$\sum$

FFT
$N \times N$

Eg.

$\hat{c}_{0,n}$

$\hat{c}_{1,n}$

$\hat{c}_{M-1,n}$

$\times$

$g^{NK-1,n}$

1110 1111 32 1112

<u>Fig. 11</u>

Fig. 10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2608474 A1

**Littérature non-brevet citée dans la description**

- **FETTWEIS et al.** GFDM-Generalized Frequency Division Multiplexing. *IEEE Vehicular Technology Conference,* Avril 2009
- **MICHAILOW et al.** Generalized Frequency Division Multiplexing : Analysis of an Alternative Multi- Carrier Technique for Next Generation Cellular Systems. *International Symposium on Wireless Communication System (ISWCS'12),* Août 2012
- **P. P. VAIDYANATHAN ; PRENTICE HALL ; ENGLEWOOD CLIFFS.** Multirate systems and filter banks. 1993